# EUROPEAN PATENT SPECIFICATION

(11) **EP 1 571 675 B1**
(45) Date of publication and mention of the grant of the patent: **25.05.2011**
(21) Application number: 04016606.8
(22) Date of filing: 14.07.2004
(51) Int. Cl.: G21C 17/108

(54) **Digital control system and method for neutron flux mapping systems**
Vorrichtung und Verfahren zur numerischen Steuerung von Neutronenflussaufzeichnungssystemen
Dispositif et procédé de commande numérique d'un système d'acquisition de cartes de flux neutronique

(30) Priority: 09.01.2004 KR 2004001435
(43) Date of publication of application: 07.09.2005
(73) Proprietor: Korea Electric Power Corporation, Seoul 135-791 (KR)
(72) Inventor: Song, Seong-II, Daejeon Metropolitan City 305-380 (KR); Cho, Byung-Hak, Daejeon Metropolitan City 305-380 (KR); Shin, Chang-Hoon, Daejeon Metropolitan City 305-380 (KR); Byun, Seung-Hyun, Daejon Metropolitan City, 305-380 (KR)
(74) Representative: Reinhard - Skuhra - Weise & Partner GbR

(56) References cited:
- EP-A1- 0 346 182
- EP-A1- 0 450 231
- US-A- 4 239 595
- US-A- 4 268 354

## Description

The present invention relates generally to a digital control system and method for neutron flux mapping systems, and more particularly to a digital control system and method for neutron flux mapping systems that is capable of realizing an operation panel of the neutron flux mapping systems, which is provided for acquiring distribution data of a plurality of neutrons inside a nuclear reactor to verify the operating conditions of the nuclear reactor, as an open-ended and standardized system that can be easily maintained and upgraded, providing a graphic user interface (GUI)-based operation interface, and realizing the operation panel of the neutron flux mapping systems on the basis of an event driven operating system so that the operation panel has an operation diagnosis function, an alarm function, and an interlock function as well as an automatic operation function, thereby improving convenience and reliability of the operation.

### Description of the Related Art

Generally, a neutron flux mapping system for nuclear reactors serves to measure distribution of neutrons to verify the operation status of a reactor core. The neutron flux mapping systems, which comprises movable neutron detectors, drivers for respectively driving the detectors, a detector path selector, and a control system, drives the detectors so that the detectors are inserted into the nuclear reactor in regular sequence through a plurality of assigned paths, and records each detector currents produced by means of the neutron, whereby distribution of the neutrons inside the nuclear reactor is measured.

The control system for neutron flux mapping systems as described above is comprised of relay logic-based instruments, or conventional microprocessor-based instruments. Each conventional instrument does not have an open architecture. So, the user should secure maintenance parts dedicated to the respective manufacturer. Also, parts are not easily supplied, as the parts are no longer produced with the change of technology. Consequently, the user may have difficulties in operating and maintaining the control system.

Operating systems installed in the conventional microprocessor-based instruments are composed of machine language-based programs, such as assembly languages. Especially, the conventional control system uses a text user interface (TUI)- and procedure driven operating system, whereby verification of the work status and convenience of the operation are not sufficiently supplied.

Document EP-A1-0 450 231 discloses a digital control system according to the preamble of claim 1 and a method according to the preamble of claim 23.

### SUMMARY OF THE INVENTION

Therefore, the present invention has been made in view of the above problems, and it is an object of the present invention to provide a digital control system and method for neutron flux mapping systems that is capable of realizing an operation panel of the neutron flux mapping systems, which is provided for acquiring distribution data of a plurality of neutrons inside a nuclear reactor to verify the operating conditions of the nuclear reactor, as an open-ended and standardized system that can be easily maintained and upgraded, providing a graphic user interface (GUI)-based operation interface, and realizing the operation panel of the neutron flux mapping systems on the basis of an event driven operating system so that the operation panel has an operation diagnosis function, an alarm function, and an interlock function as well as an automatic operation function, thereby improving convenience and reliability of the operation.

In accordance with one aspect of the present invention, the above and other objects can be accomplished by the provision of a digital control system having the features defined in claim 1.

Preferably, the digital control system comprises a data communication network; operation means for collecting and administering work status information, an alarm, and flux data received through the data communication network in response to the operation control signal, and outputting the collected and administrated operation status information, alarm, and flux data on a screen; monitoring means, having the same construction as the operation means, for monitoring the work status through the data communication network at a remote area, the monitoring means being exclusively usable as the operation means in case of emergency; core physics calculation means for analyzing the status of the core of the nuclear reactor using the flux data received through the data communication network; and main control means for comparing work status information carried out in response to the operation control signal with an allowable value or a limit value set as the operation information to diagnose the operation status information, outputting an interlock signal and an alarm signal to protect the instruments when an abnormal condition occurs, collecting neutron distribution data inside the nuclear reactor measured by means of the detectors and storing the neutron distribution data as flux data, and transmitting the work status information, the alarm, and the flux data through the data communication network.

Preferably, the digital control system for neutron flux mapping systems further comprises: auxiliary control means for enabling the detectors to be emergently inserted or emergently withdrawn in a prescribed speed and direction through the detector paths in a manual mode when the main control means is not available.

Preferably, the digital control system for neutron flux mapping systems further comprises: a plurality of acoustic sensors attached to the drivers and the path selector for sensing and outputting the sound signal of the drivers and of the path selector; and field sound control means for processing the detected signal inputted from the acoustic sensors so that the sounds are outputted through a speaker.

Preferably, the operation means comprises: a user interface module having a user interface screen for allowing the operator to input operation information thereon; a data transceiver module for transmitting an operation control signal inputted on the user interface screen to the main control means in response to the request of the operation and receiving work status information, an alarm, and flux data from the main control means in response to the operation control signal; and a flux data processing module for collecting the flux data to examine reliability of the flux data, correcting and contracting the examined flux data, and generating the corrected and contracted flux data in the form of a file, a graph, or a numeral so that the flux data is stored, displayed or outputted.

Preferably, the operation means has an interface screen for updating the operating system of the main control means in response to the request of the operator, and transmits the operating system of the main control means updated on the interface screen to the main control means so that the operating system stored in the main control means can be updated.

In accordance with another aspect of the present invention, there is provided a digital control method having the features defined in claim 23. regular sequence through detector paths selected by means of a detector path selector so that distribution of neutrons inside the nuclear reactor is measured to verify the current status of the nuclear reactor, wherein the digital control method comprises: an operation control step for outputting an operation control signal using operation information manually set by an operator or prescribed operation information, and collecting and administering flux data transmitted in response to the operation control signal; and a main control step for enabling the detectors to be inserted or withdrawn in a prescribed speed and direction through the detector paths in response to the operation control signal at the operation control step, collecting and storing neutron distribution data inside the nuclear reactor measured by means of the detectors, and transmitting the neutron distribution data to operation means.

Preferably, in the digital control method the operation control step is for outputting a prescribed operation information through a data communication network, collecting and administering work status information, an alarm, and flux data received through the data communication network in response to the operation control signal, and outputting the collected and administrated operation status information, alarm, and flux data on a screen; the method further comprises a monitoring step, having the same procedure as the operation control step, for monitoring the work status through the data communication network at a remote area, the monitoring step being exclusively usable as the operation control step in case of emergency; a core physics calculation step for analyzing the status of the core of the nuclear reactor using the flux data received through the data communication network; and wherein the main control step is for comparing work status information carried out in response to the operation control signal with an allowable value or a limit value set as the operation information to diagnose the operation status information, outputting an interlock signal and an alarm signal to protect the instruments when an abnormal condition occurs, collecting neutron distribution data inside the nuclear reactor measured by means of the detectors and storing the neutron distribution data as flux data, and transmitting the work status information, the alarm, and the flux data through the data communication network.

Preferably, the digital control method for neutron flux mapping systems further comprises: an auxiliary control step for enabling the detectors to be emergently inserted or emergently withdrawn in a prescribed speed and direction through the detector paths in a manual mode when main control means is not available.

Preferably, the digital control method for neutron flux mapping systems further comprises: a field sound control step for enabling the detected signal inputted from a plurality of acoustic sensors, attached to the drivers and the path selector for sensing and outputting the sound signal of the drivers and of the path selector; and field sound control means for processing the detected signal inputted from the acoustic sensors so that the sounds are outputted through a speaker.

Preferably, the operation control step comprises: a user interface step for providing a user interface screen so that the operator can input operation information on the user interface screen; a data transmitting/receiving step for transmitting an operation control signal inputted on the user interface screen to main control means in response to the request of the operation and receiving work status information, an alarm, and flux data from the main control means in response to the operation control signal; and a flux data processing step for collecting the flux data to examine reliability of the flux data, correcting and contracting the examined flux data, and generating the corrected and contracted flux data in the form of a file, a graph, or a numeral so that the flux data is stored, displayed or outputted.

Preferably, the operation control step provides an interface screen for updating the operating system of the main control means in response to the request of the operator, and the digital control method further comprises: a transmitting step for transmitting the operating system of main control means updated on the interface screen to the main control means so that the operating system stored in the main control means can be updated.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram illustrating a digital control system for neutron flux mapping systems according to a preferred embodiment of the present invention;
FIG. 2 is a block diagram illustrating a digital control system for neutron flux mapping systems according to another preferred embodiment of the present invention;
FIG. 3 is a block diagram illustrating the construction of a main control unit applied to the digital control system for neutron flux mapping systems shown in FIGS. 1 and 2;
FIG. 4 is a block diagram illustrating the construction of an operation console applied to the digital control system for neutron flux mapping systems shown in FIGS. 1 and 2;
FIG. 5 is a block diagram illustrating the construction of a monitoring console applied to the digital control system for neutron flux mapping systems shown in FIGS. 1 and 2;
FIG. 6 is a block diagram illustrating the construction of a core physics calculation console applied to the digital control system for neutron flux mapping systems shown in FIGS. 1 and 2;
FIG. 7 is a block diagram illustrating the construction of an auxiliary control unit applied to the digital control system for neutron flux mapping systems according to the present invention;
FIG. 8 is a block diagram illustrating the construction of a field sound control unit applied to the digital control system for neutron flux mapping systems according to the present invention;
FIG. 9 is a block diagram illustrating the construction of a detector power supply unit applied to the digital control system for neutron flux mapping systems according to the present invention;
FIG. 10 is a block diagram illustrating the construction of a detector signal processing unit applied to the digital control system for neutron flux mapping systems according to the present invention;
FIG. 11 is a flowchart illustrating a main control routine of the main control unit according to the present invention;
FIG. 12 is a flowchart illustrating a path selector control routine of the main control unit according to the present invention;
FIG. 13 is a flowchart illustrating an insert control routine of the main control unit according to the present invention;
FIG. 14 is a flowchart illustrating a scan control routine of the main control unit according to the present invention;
FIG. 15 is a flowchart illustrating a record control routine of the main control unit according to the present invention;
FIG. 16 is a flowchart illustrating a withdraw control routine of the main control unit according to the present invention;
FIG. 17 is a flowchart illustrating a driver run/stop control routine of the main control unit according to the present invention;
FIG. 18 is a flowchart illustrating a driver direction control routine of the main control unit according to the present invention;
FIG. 19 is a flowchart illustrating a driver speed control routine of the main control unit according to the present invention;
FIG. 20 is a flowchart illustrating a flux data acquisition routine of the main control unit according to the present invention;
FIG. 21 is a flowchart illustrating a detector speed diagnosis routine of the main control unit according to the present invention;
FIG. 22 is a flowchart illustrating a detector no-motion diagnosis routine of the main control unit according to the present invention;
FIG. 23 is a flowchart illustrating a path verification routine of the main control unit according to the present invention;
FIG. 24 is a view showing a manual mode operation screen of the operation console according to the present invention;
FIG. 25 is a view showing a semi-automatic mode operation screen of the operation console according to the present invention;
FIG. 26 is a view showing an automatic mode operation screen of the operation console according to the present invention;
FIG. 27 is a view showing an inside path selector operation screen of the operation console according to the present invention;
FIG. 28 is a view showing an outside path selector operation screen of the operation console according to the present invention;
FIG. 29 is a view showing a detector power supply unit operation screen of the operation console according to the present invention; and
FIG. 30 is a flowchart illustrating a flux data processing routine of the operation console according to the present invention.

### DESCRIPTION OF THE PREFERRED EMBODIMENTS

Now, preferred embodiments of the present invention will be described in detail with reference to the accompanying drawings.

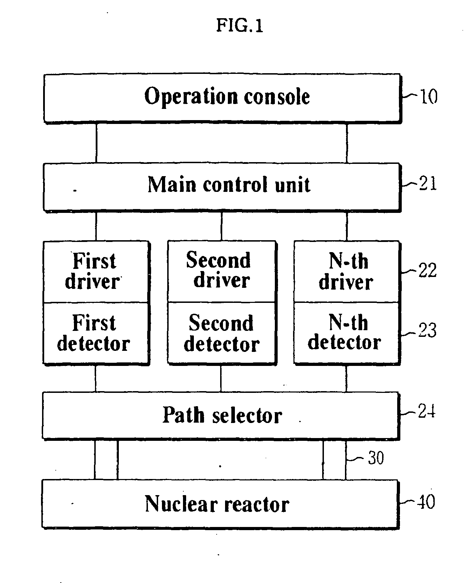

FIG. 1 is a block diagram illustrating a digital control system for neutron flux mapping systems according to a preferred embodiment of the present invention.

The control system enables a plurality of detectors 23, which are driven by means of a plurality of drivers 22, respectively, to be inserted into a nuclear reactor 40 in regular sequence through detector paths 30 selected by means of a detector path selector 24 so that distribution of neutrons inside the nuclear reactor is measured to verify the current status of the nuclear reactor. As shown in FIG. 1, the digital control system according to the present invention comprises: an operation console 10 for outputting an operation control signal using operation information manually set by an operator or prescribed operation information, and collecting and administering flux data transmitted in response to the operation control signal; and a main control unit 21 for enabling the detectors 23 to be inserted or withdrawn in a prescribed speed and direction through the detector paths 30 in response to the operation control signal of the operation console 10, collecting and storing neutron distribution data inside the nuclear reactor measured by means of the detectors 23, and transmitting the neutron distribution data to the operation console 10.

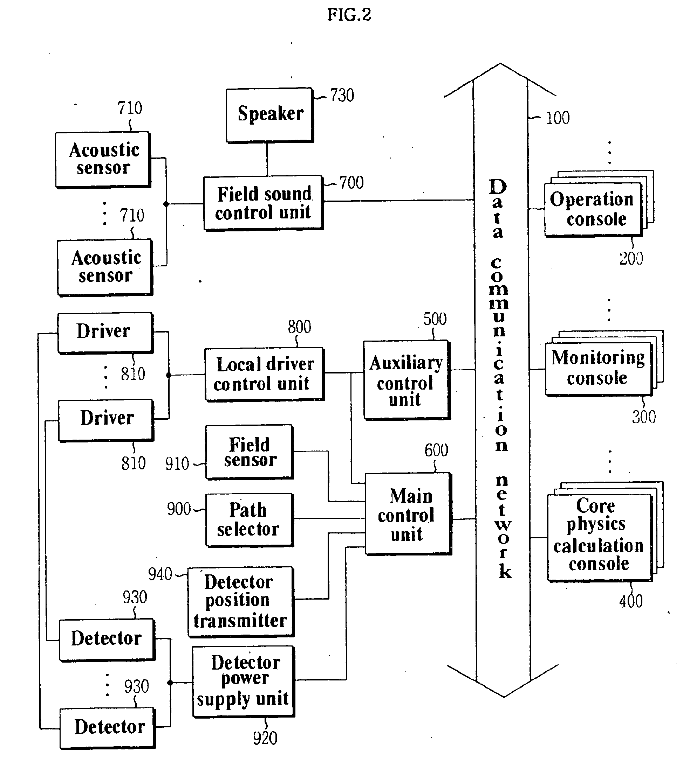

FIG. 2 is a block diagram illustrating a digital control system for neutron flux mapping systems according to another preferred embodiment of the present invention.

The control system enables a plurality of detectors 930, which are driven by means of a plurality of drivers 810, respectively, to be inserted into a nuclear reactor in regular sequence through detector paths selected by means of a detector path selector 900 so that distribution of neutrons inside the nuclear reactor is measured to verify the current status of the nuclear reactor. As shown in FIG. 2, the digital control system according to the present invention comprises: a data communication network 100; an operation console 200 for outputting an operation control signal using operation information manually set by an operator or prescribed operation information through the data communication network 100, collecting and administering work status information, an alarm, and flux data received through the data communication network 100 in response to the operation control signal, and outputting the collected and administrated operation status information, alarm, and flux data on a screen; a monitoring console 300, having the same construction as the operation console 200, for monitoring the work status through the data communication network 100 at a remote area, the monitoring console 200 being exclusively usable as the operation console 200 in case of emergency; a core physics calculation console 400 for analyzing the status of the core of the nuclear reactor using the flux data received through the data communication network 100; a main control unit 500 for enabling the detectors 930 to be inserted or withdrawn in a prescribed speed and direction through the detector paths in response to the operation control signal of the operation console 200, comparing work status information carried out in response to the operation control signal with an allowable value or a limit value set as the operation information to diagnose the operation status information, outputting an interlock signal and an alarm signal to protect the instruments when an abnormal condition occurs, collecting neutron distribution data inside the nuclear reactor measured by means of the detectors 930 and storing the neutron distribution data as flux data, and transmitting the work status information, the alarm, and the flux data through the data communication network 100; an auxiliary control unit 600 for enabling the detectors to be emergently inserted or emergently withdrawn in a prescribed speed and direction through the detector paths in a manual mode when the main control unit is not available; a plurality of acoustic sensors 710 attached to the drivers 810 and the path selector 900 for sensing and outputting the sound signal of the drivers 810 and of the path selector 900; a field sound control unit 700 for processing the detected signal inputted from the acoustic sensors so that the sounds are outputted through a speaker 730; a plurality of field sensors 910 attached to the detector paths and the drivers 810 for outputting current position signals of the detectors 930 to the main control unit 500 and the auxiliary control unit 600; and a detector power supply unit 920 for supplying voltage to the detectors in response to the control of the main control unit.

The drivers 810 are driven in response to control signals transmitted from the main control unit 500 or the auxiliary control unit 600 to an inverter of a local driver control unit 800 for driving a spiral cable connected to the detectors by means of rotation of an electric motor with a helical gear so that the detectors can be inserted into or withdrawn from the inside of the nuclear reactor.

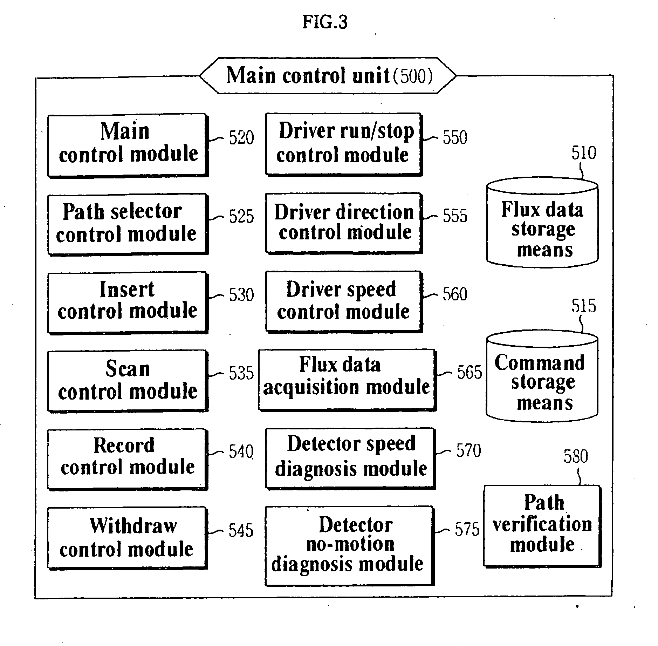

FIG. 3 is a block diagram illustrating the construction of a main control unit applied to the digital control system for neutron flux mapping systems shown in FIGS. 1 and 2.

As shown in FIG. 3, the main control unit comprises a flux data storage means 510, command storage means 515, a main control module 520, a path selector control module 525, an insert control module 530, a scan control module 535, a record control module 540, a withdraw control module 545, a driver run/stop control module 550, a driver direction control module 555, a driver speed control module 560, a flux data acquisition module 565, a detector speed diagnosis module 570, a detector no-motion diagnosis module 575, and a path verification module 580.

The flux data storage means 510 stores flux data acquired by means of the detectors 23, 930 together with path identification information.

The command storage means 515 stores the operation control information inputted through the operation console 200 by the operator.

The main control module 520 determines whether a manual mode, a semi-automatic mode, or an automatic mode is selected, controls the path selector 24, 900 according to a path control command inputted by the operator and controls the drivers 22, 810 according to a driver run/stop control command, a driver direction control command, and a driver speed control command inputted by the operator when the manual mode is selected, controls the path selector 24, 900 according to a path control command inputted by the operator and controls the drivers 22, 810 partially automatically according to an insert control command, a scan control command, a record control command, a withdraw control command inputted by the operator when the semi-automatic mode is selected, initializes a sequence count to determine whether an external interrupt signal exists when the automatic mode is selected, finishes the operation when the external interrupt signal exists, automatically generates a path control command according to a prescribed work sequence to control the path selector 24, 900 and generates an insert control command, a scan control command, a record control command, and a withdraw control command according to a prescribed operation sequence to control the drivers 22, 810 when the external interrupt signal does not exist, finishes the work when the sequence count is larger than a prescribed limit value, and increases the sequence count so that the operation is repeatedly performed according to a next work sequence when the sequence count is not larger than the prescribed limit value.

The path selector control module 525 selects a detector path in response to a detector path control command inputted manually or automatically from the main control module 520, generates an alarm informing that the detectors are inserted and a path selector stop interlock signal when the current position of the detectors inserted through the detector path is verified and it is determined that the current position of the detectors is above a withdraw limit, receives the current path of the detectors from detector path switches in the path selector, and drives the path selector until the value inputted from the detector path switches is equal to a manually or automatically set detector position command value.

The path selector control module 525 counts an operation time after the path selector is driven, and generates a path select time-over alarm and a path selector stop interlock signal so that the path selector 24, 900 is not driven when the counted operation time is above a prescribed allowable value.

The insert control module 530 detects the current position of the detectors 23, 930 using the field sensors 910 and detector position transmitter 940 while enabling the drivers 22, 810 to run in a forward direction at high speed when an insert command of the detectors 23, 930 is issued manually or automatically from the main control module 520, enables the insertion operation of the detectors to be continuously carried out when the current position of the detectors 23, 930 is larger than a withdraw limit value and smaller than the lower limit value of the nuclear reactor, and enables the drivers 22, 810 to be stopped when the current position of the detectors 23, 930 is smaller than the withdraw limit value or larger than the lower limit value of the nuclear reactor.

The scan control module 535 enables the detectors 23, 930 to scan the inside of the nuclear reactor while enabling the drivers 22, 810 to run in a forward direction at low speed and detects the current position of the detectors using the field sensors 910 and detector position transmitter 940 when a scan command of the detectors 23, 930 is issued manually or automatically from the main control module 520, enables the scan operation of the detectors to be continuously carried out when the current position of the detectors 23, 930 is larger than the lower limit value of the nuclear reactor and smaller than the upper limit value of the nuclear reactor, and enables the drivers 22, 810 to be stopped when the current position of the detectors 23, 930 is smaller than the lower limit value of the nuclear reactor and larger than the upper limit value of the nuclear reactor.

The record control module 540 enables data acquired by means of the detectors 23, 930 to be received and recorded while enabling the drivers 22, 810 to run in a reverse direction at low speed and detects the current position of the detectors using the field sensors 910 and detector position transmitter 940 when a record command of the detectors 23, 930 is issued manually or automatically from the main control module 520, enables the record operation of the detectors to be continuously carried out when the current position of the detectors 23, 930 is larger than the lower limit value of the nuclear reactor and smaller than the upper limit value of the nuclear reactor, and enables the drivers 22, 810 to be stopped when the current position of the detectors 23, 930 is smaller than the lower limit value of the nuclear reactor and larger than the upper limit value of the nuclear reactor.

The withdraw control module 545 enables the detectors 23, 930 to be withdrawn while enabling the drivers 22, 810 to run in a reverse direction at high speed and detects the current position of the detectors using the field sensors 910 and detector position transmitter 940 when a withdraw command of the detectors 23, 930 is issued manually or automatically from the main control module 520, enables the scan operation of the detectors to be continuously carried out when the current position of the detectors 23, 930 is larger than a withdraw limit value and smaller than the lower limit value of the nuclear reactor, and enables the drivers 22, 810 to be stopped when the current position of the detectors 23, 930 is smaller than the withdraw limit value and larger than the lower limit value of the nuclear reactor.

The driver run/stop control module 550 determines whether the path selector 24, 900 is running or not when a run/stop command of the drivers 22, 810 is issued manually or automatically from the main control module 520, generates an alarm and outputs a driver stop interlock signal when the path selector 24, 900 is running, determines whether a calibration path is set in duplicate or not when the path selector 24, 900 is not running, generates an alarm and a driver stop interlock signal when the calibration path is set in duplicate, turns on a run contact in the case that the command from the main control module 520 is a run command when the calibration path is not set in duplicate, and turns off the run contact in the case that the command from the main control module 520 is a stop command when the calibration path is not set in duplicate.

The driver direction control module 555 enables a forward contact to be turned on so that the drivers 22, 810 can be rotated in a forward direction when a forward rotation command of the drivers is inputted manually or automatically from the main control module 520, and enables a reverse contact to be turned off so that the drivers 22, 810 can be rotated in a reverse direction when a reverse rotation command of the drivers is inputted manually or automatically from the main control module 520. The driver speed control module 560 enables a low-speed contact to be turned on so that the drivers 22, 810 can be rotated at low speed when a low-speed rotation command is inputted manually or automatically from the main control module 520, and enables a high-speed contact to be turned on so that the drivers 22, 810 can be rotated at high speed when a high-speed rotation command is inputted manually or automatically from the main control module 520.

The flux data acquisition module 565 initializes a data count corresponding to the total number of the flux data units, acquires and stores data units one by one, increases the data count, and enables a data acquisition routine to be finished when the data count is above a prescribed limit value.

The flux data acquisition module 565 is operated so that the data acquisition is carried out by a user or by units of a prescribed data acquisition time.

The detector speed diagnosis module 570 stores a detector position inputted from the detector position transmitter 940 by units of a prescribed period, subtracts the previous detector position value from the current detector position value, divides the subtraction result value by a prescribed time, calculates the divided result value, i.e., the speed value of the detectors 23, 930 as an absolute speed value, compares the absolute speed value with an allowable lower limit value and an allowable upper limit value, and generates an alarm and outputs a driver stop interlock signal when the absolute speed value is smaller than the allowable lower limit value and larger than the allowable upper limit value.

The detector no-motion diagnosis module 575 initializes the time and the number of detector storage reel rotation pulses, counts the detector storage reel rotation pulses for a prescribed period of time, continuously performs a detector no-motion diagnosis routine when the number of the rotation pulses is larger than an allowable value, and generates an alarm and outputs a driver stop interlock signal when the number of the rotation pulses is smaller than an allowable value.

The path verification module 580 calculates a path index corresponding to the current path detected by means of the path switches in the path selector simultaneously when the path selector is operated, determines whether the combination code of the path switches is equal to a prescribed code value for each path index, and considers that the path selector is electrically or mechanically defective and therefore generates a path mismatch alarm and outputs a path selector stop interlock signal when the combination code of the path switches is not equal to the code value.

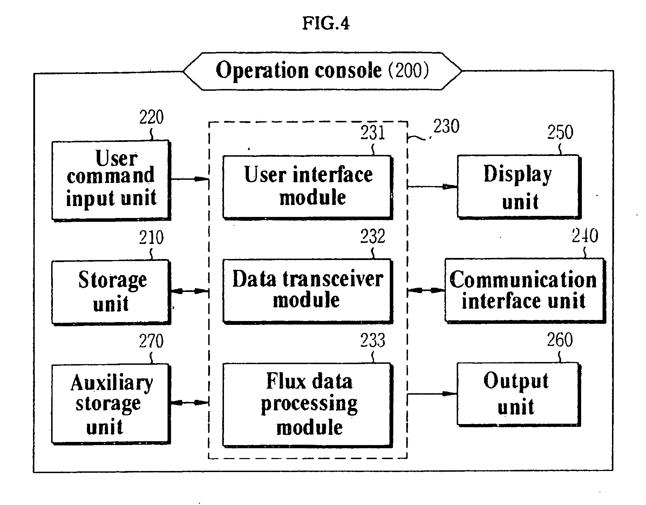

FIG. 4 is a block diagram illustrating the construction of an operation console applied to the digital control system for neutron flux mapping systems shown in FIGS. 1 and 2.

As shown in FIG. 4, the operation console comprises: a storage unit 210 for storing an operating system of the operation console, a work sequence for measuring distribution of a plurality of neutrons inside the nuclear reactor inputted by an operator, operation information such as an allowable value or a limit value, work status information, an alarm, and data such as flux data; a user signal input unit 220, including a keyboard, mouse and a touch screen, for enabling the user to input the operation information; a control unit 230 for controlling the entire system according to the operating system of the storage unit; a communication interface unit 240 for transmitting and receiving the operation information and the data to and from the system connected through the data communication network 100 in response to the control of the control unit 230; a display unit 250, including a monitor and a touch screen, for displaying the operation information and data on the screen so that the operator can see the operation information and data in response to the control of the control unit 230; an output unit 260, including a printer and a plotter, for outputting the operation information and the data in the form of a printout in response to a request of the operator; and an auxiliary storage unit 270, including a magnetic disk and an optical disk, for recording the operation information and the data in response to the control of the control unit 230.

The control unit 230 comprises: a user interface module 231 having a user interface screen, on which the operator inputs operation information; a data transceiver module 232 for transmitting an operation control signal inputted on the user interface screen to the main control unit 500 in response to the request of the operation and receiving work status information, an alarm, and flux data from the main control unit 500 in response to the operation control signal; and a flux data processing module 233 for collecting the flux data to examine reliability of the flux data, correcting and contracting the examined flux data, and generating the corrected and contracted flux data in the form of a file, a graph, or a numeral so that the flux data is stored, displayed or outputted.

The user interface module 231 has various menu items for classifying a plurality of flux paths inside the nuclear reactor into prescribed groups in an automatic operation mode, a semi-automatic operation mode, or a manual operation mode, outputting operation control signals by the prescribed groups to control the path selector and the drivers and to control the output voltage of the detector power supply unit so that the flux data can be acquired, and various display items for displaying work status information, an alarm and flux data by the prescribed groups.

Especially, the user interface module 231 has an automatic operation menu item for automatically selecting detector paths from all flux paths inside the nuclear reactor according to a work sequence prescribed by groups in the automatic operation mode, inserting the detectors into the automatically selected detector paths, scanning and recording the detectors, withdrawing the detectors from the automatically selected detector paths, automatically controlling the voltage of the detectors, and automatically processing the collected flux data.

The operation console 200 has an interface screen, on which the operating system of the main control unit 500 can be updated in response to the request of the operator, and transmits the updated operating system of the main control unit 500 to the main control unit 500 so that the operating system stored in the main control unit 500 can be updated.

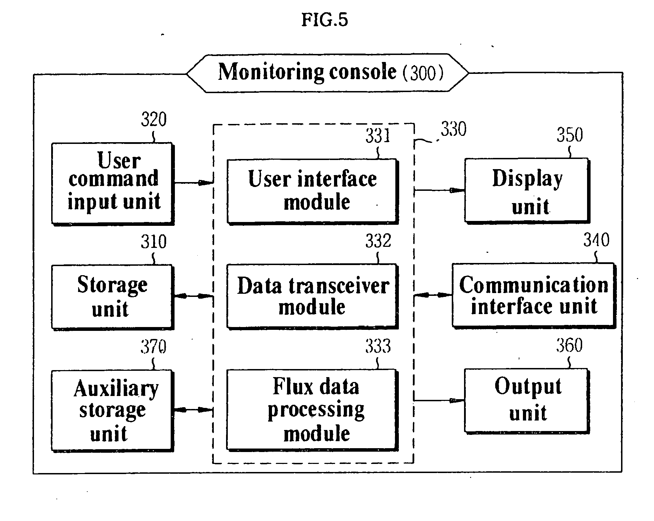

FIG. 5 is a block diagram illustrating the construction of a monitoring console 300 applied to the digital control system for neutron flux mapping systems shown in FIGS. 1 and 2.

As shown in FIG. 5, the monitoring console 300 has the same construction as the operation console 200 except that the monitoring console is installed at a remote area far apart from the place where the work is usually performed by the operator using the operation console 200, and serves to backup the operation console in case of emergency. Therefore, a detailed description of the construction of the monitoring console 300 will not be given.

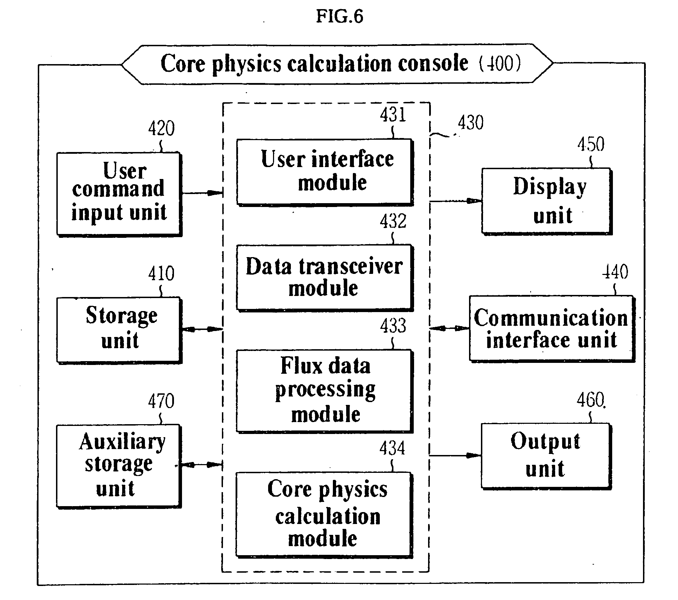

FIG. 6 is a block diagram illustrating the construction of a core physics calculation console 400 applied to the digital control system for neutron flux mapping systems shown in FIGS. 1 and 2.

As shown in FIG. 6, the core physics calculation console 400 has the same construction as the operation console 200 except that the core physics calculation console 400 further comprises a core physics calculation module 434 for receiving the flux data from the operation console 200 so that the flux data is applied to a core physics calculation program, calculating main variables relevant to safety of the nuclear reactor such as output peak coefficient, quadrant output deviation, and lower/upper output deviation, and providing the analysis result. Therefore, a detailed description of the construction of the core physics calculation console 400 will not be given.

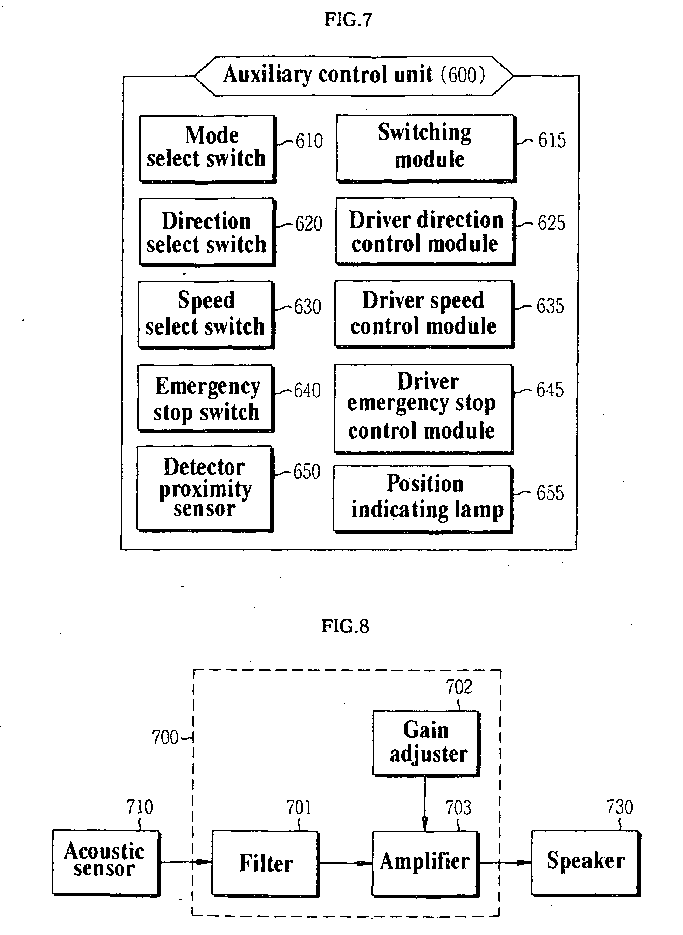

FIG. 7 is a block diagram illustrating the construction of an auxiliary control unit 600 applied to the digital control system for neutron flux mapping systems according to the present invention.

As shown in FIG. 7, the auxiliary control unit 600 comprises: a mode select switch 610 for enabling the operator to set the operation mode to a manual mode or an automatic mode; a direction select switch 620 for selecting the operation mode of the drivers; a speed select switch 630 for selecting the speed mode of the drivers; an emergency stop switch 640 for performing an emergency stop of the drivers; a switching module 615 for enabling the operator to switch the operation mode to an operation condition set using the above-mentioned switches when the main control unit 500 is not available; a driver direction control module 625 for enabling the detectors to be inserted into or withdrawn from the detector paths in response to the control of the switching module 615; a driver speed control module 635 for controlling an insert speed or withdraw speed of the detectors in response to the control of the switching module 615; a driver emergency stop control module for stopping the insert operation or the withdraw operation of the detectors in response to the control of the switching module 615; and a detector proximity sensor 650 for sensing proximity of the detectors to output a detector proximity signal; and a position indicating lamp 655 that is turned on or off in response to the detector proximity signal outputted from the detector proximity sensor 650.

FIG. 8 is a block diagram illustrating the construction of a field sound control unit 700 applied to the digital control system for neutron flux mapping systems according to the present invention.

As shown in FIG. 8, the field sound control unit 700 comprises: filters 701 attached to the plurality of drivers and the path selector for eliminating noise of the sensing signals inputted from the plurality of acoustic sensors 710 that sense and output the sound signal of the drivers and the path selector; an amplifier 703 for converting sensing signals with noise eliminated by means of the filters 701 into acoustic signals, amplifying the acoustic signals to a prescribed level, and outputting the amplified acoustic signal to a speaker 730; and a gain adjuster 702 for adjusting the amplification level of the amplifier 703 according to the manipulation of the operator.

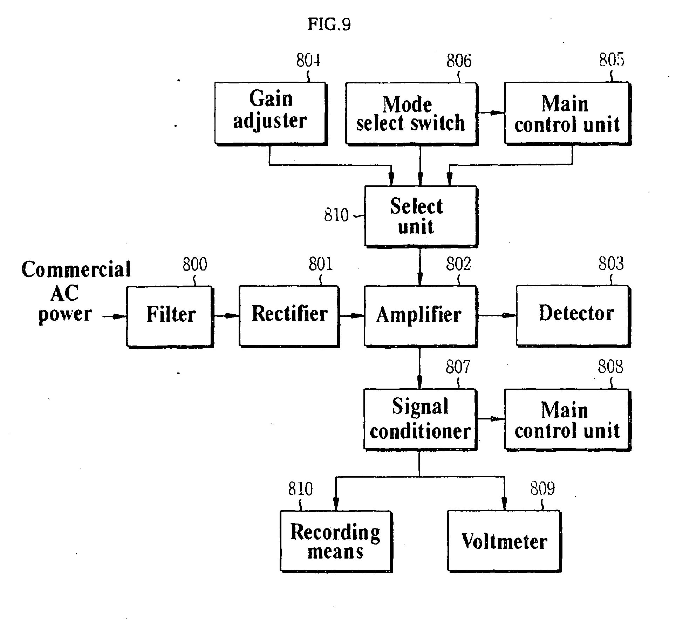

FIG. 9 is a block diagram illustrating the construction of a detector power supply unit applied to the digital control system for neutron flux mapping systems according to the present invention.

As shown in FIG. 9, the detector power supply unit comprises: a filter 800 energized by a commercial AC power (220 VAC) for eliminating noise; a rectifier 801 for rectifying AC voltage with eliminated noise; an amplifier 802 for isolating the rectified voltage and supplying DC voltage to the detector 803; a signal conditioner 807 for converting the DC voltage and outputting the converted DC voltage to a main control unit 808, a voltmeter 809 and recording means 811; a mode select switch 806 for enabling the operator to select a manual mode or an automatic mode; a gain adjuster 804 for receiving a gain adjustment value from the operator when the manual mode is selected by means of the mode select switch 806; and a select unit 810 for outputting a gain adjustment value predetermined by a main control unit 805 to the amplifier 802 when the automatic mode is selected by means of the mode select switch 806.

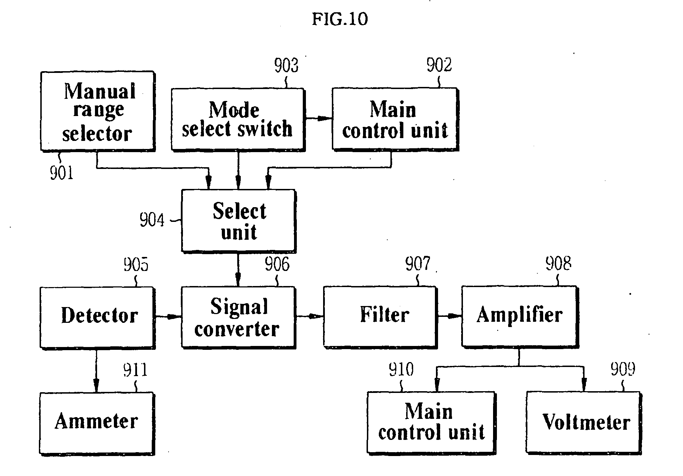

FIG. 10 is a block diagram illustrating the construction of a detector signal processing unit applied to the digital control system for neutron flux mapping systems according to the present invention.

As shown in FIG. 10, the detector signal processing unit comprises: an ammeter 911 for displaying measured current (0 ~ 5 mA) inputted from a detector 905 so that the operator can see the measured current; a signal converter 906 for receiving the measured current and converting the measured current into a prescribed voltage (0 ∼ 100 mV); a filter 907 for eliminating noise from the voltage converted by means of the signal converter 906; an amplifier 908 for amplifying the voltage with noise eliminated by means of the filter 907 to a prescribed level and outputting the amplified voltage to recording means 909 or a main control unit 910; a mode select switch 903 for enabling the operator to select a manual mode or an automatic mode; and a select unit 904 for enabling the signal converter 906 to generate voltage according to a range previously set by means of a manual range selector 901 when the manual mode is selected by means of the mode select switch 903 and enabling the signal converter 906 to generate voltage according to a range previously set by means of a main control unit 902 when the automatic mode is selected by means of the mode select switch 903.

A range select signal inputted from the manual range selector 901 or the main control unit 902 is one of 50 uA, 150 uA, 500 uA, 1.5 mA, and 5 mA. The signal converter 906 selects one of 2 KΩ, 666.6 Ω, 200 Ω, 66.6 Ω, and 20 Ω as measured resistance in response to the range select signal.

Operation of the digital control system for neutron flux mapping systems with the above-stated construction according to the present invention will be described below.

### Embodiment 1

In accordance with one aspect of the present invention, there is provided a digital control method for neutron flux mapping systems that enables a plurality of detectors, which are driven by means of a plurality of drivers, respectively, to be inserted into a nuclear reactor in regular sequence through detector paths selected by means of a detector path selector so that distribution of neutrons inside the nuclear reactor is measured to verify the current status of the nuclear reactor, wherein the digital control method comprises: an operation control step for outputting an operation control signal using operation information manually set by an operator or prescribed operation information, and collecting and administering flux data transmitted in response to the operation control signal; and a main control step for enabling the detectors to be inserted or withdrawn in a prescribed speed and direction through the detector paths in response to the operation control signal at the operation control step, collecting and storing neutron distribution data inside the nuclear reactor measured by means of the detectors, and transmitting the neutron distribution data to the operation console.

As shown in FIG. 1, the operation console 10, which is capable of performing the above-mentioned digital control method for neutron flux mapping systems according to Embodiment 1 of the present invention, provides a manual mode and an automatic mode. In the manual mode, the operator can set the operation information to a desired value. The set operation information is transmitted to the main control unit 21. The main control unit 21 controls the operation status of the drivers 22, the detectors 23, and the path selector 24 according to the operation information.

Each detector 23 is inserted into a predetermined position through a prescribed detector path according to the control of the main control unit 21 so that distribution of the neutrons inside the nuclear reactor is detected. The detected result is transmitted to the main control unit 21. The main control unit 21 stores the detected result value as flux data, and transmits the detected result value to the operation console 10. The flux data is stored, displayed, or outputted so that the current status of the nuclear reactor can be recognized.

When the automatic mode is selected by the operator, the operation information is generated on the basis of a predetermined value. The operation procedure of the automatic mode is identical to that of the manual mode, and therefore a detailed description of the operation procedure of the automatic mode will not be given.

### Embodiment 2

In accordance with another aspect of the present invention, there is provided a digital control method for neutron flux mapping systems that enables a plurality of detectors, which are driven by means of a plurality of drivers, respectively, to be inserted into a nuclear reactor in regular sequence through detector paths selected by means of a detector path selector so that distribution of neutrons inside the nuclear reactor is measured to verify the current status of the nuclear reactor, wherein the digital control method comprises: an operation control step for outputting an operation control signal using operation information manually set by an operator or prescribed operation information through the data communication network, collecting and administering work status information, an alarm, and flux data received through the data communication network in response to the operation control signal, and outputting the collected and administrated operation status information, alarm, and flux data on a screen; a monitoring step, having the same procedure as the operation control step, for monitoring the work status through the data communication network at a remote area, the monitoring step being exclusively usable as the operation control step in case of emergency; a core physics calculation step for analyzing the status of the core of the nuclear reactor using the flux data received through the data communication network; and a main control step for enabling the detectors to be inserted or withdrawn in a prescribed speed and direction through the detector paths in response to the operation control signal at the operation control step, comparing work status information carried out in response to the operation control signal with an allowable value or a limit value set as the operation information to diagnose the operation status information, outputting an interlock signal and an alarm signal to protect the instruments when an abnormal condition occurs, collecting neutron distribution data inside the nuclear reactor measured by means of the detectors and storing the neutron distribution data as flux data, and transmitting the work status information, the alarm, and the flux data through the data communication network.

Unlike Embodiment 1 of the present invention, the digital control system, which is capable of performing the above-mentioned digital control method for neutron flux mapping systems according to Embodiment 2 of the present invention, further comprises the monitoring console 300, the core physics calculation console 400, the auxiliary control unit 600, and the field sound control unit 700.

The monitoring console 300 is installed at an office room or at remote area. The monitoring console 300 enables the operator or the administrator to monitor the work status through the data communication network 100 at the office or at the remote area. The monitoring console 300 can be used as a substitute of the operation console 200 when the operation console 200 is inoperable.

The core physics calculation console 400 is connected to the data communication network 100, especially a communication network of a power plant so that flux data collected from the neutron flux mapping system and a computer in the power plant is applied to a core physics calculation program. Main variables relevant to safety of the nuclear reactor such as output peak coefficient, quadrant output deviation, and lower/upper output deviation are calculated and the analysis result is provided by means of the core physics calculation console 400.

The auxiliary control unit 600 enables the control mode to be switched to the manual mode by means of the mode select switch 610 when the main control unit 500 is not available. The detectors are emergently inserted or emergently withdrawn in a prescribed speed and direction through the detector paths in the manual mode by means of the direction select switch 620, the speed select switch 630, and the emergency stop switch 640.

The acoustic sensors 710 are attached to the drivers 810 and the path selector 900 for sensing mechanical movement generated at the drivers 810 and of the path selector 900 and outputting the detected signal to the field sound control unit 700. As shown in FIG. 8, the detected signal is inputted to the filter 701 of the field sound control unit 700 where noise is eliminated from the detected signal. The signal with eliminated noise is converted into an acoustic signal and amplified by means of the amplifier 703. The sound signal is finally outputted to the speaker 730 so that the operator can hear the operation sounds from the instruments operated at the work field. A skilled operator can determine whether the field instruments are normally operated or not on the basis of patterns of the operation sounds, whereby the operation and the maintenance of the instruments can be efficiently carried out.

### Main control routine of the main control unit

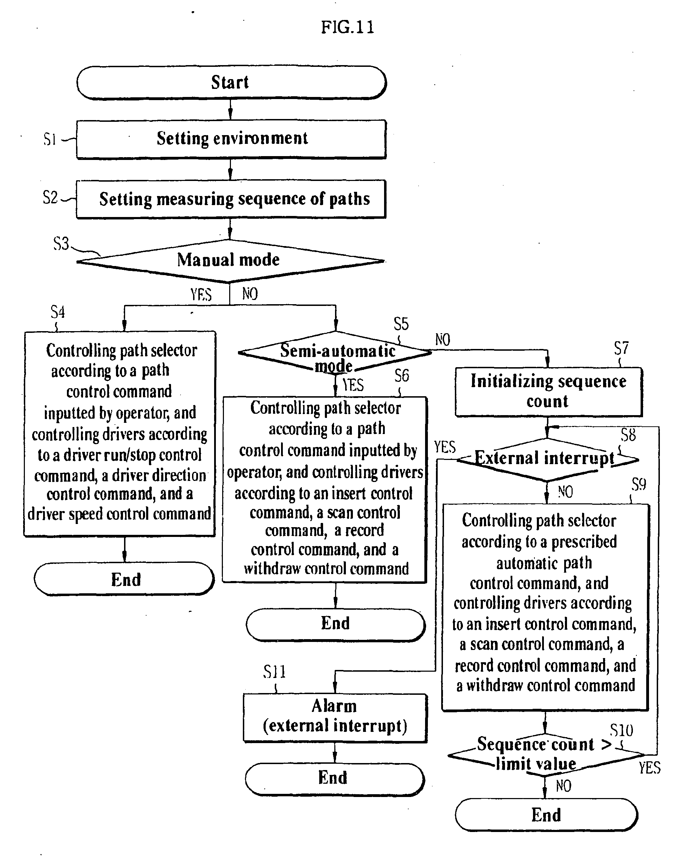

FIG. 11 is a flowchart illustrating a main control routine of the main control unit according to the present invention.

As shown in FIG. 11, allowable and limit values are set by the operator at an environment setting step (S1), the measuring sequence of the paths is set at a path measuring sequence setting step (S2), and it is determined by means of the main control module 520 of the main control unit 500 whether the manual mode is selected or not (S3).

When it is determined that the manual mode is selected at Step S3, the path selector 900 is controlled according to a path control command inputted by the operator, and the drivers 810 are controlled according to a driver run/stop control command, a driver direction control command, and a driver speed control command inputted by the operator (S4).

When it is determined that the semi-automatic mode is selected (S5), the path selector 900 is controlled according to a path control command inputted by the operator, and the drivers 810 are controlled according to an insert control command, a scan control command, a record control command, and a withdraw control command inputted by the operator so that the detectors can be partially automatically operated by sections (S6).

When it is determined that the automatic mode is selected at Step S5, a sequence count is initialized (S7) , and it is determined whether an external interrupt signal exists or not (S8). When it is determined that the external interrupt signal does not exist, a path control command is automatically generated according to a prescribed work sequence to control the path selector, and an insert control command, a scan control command, a record control command, and a withdraw control command are generated according to a prescribed work sequence to control the drivers so that the detectors can be automatically operated (S9).

It is determined whether the sequence count is larger than a prescribed limit value (S10). When it is determined that the sequence count is smaller than the prescribed limit value, the procedure returns to Step 8, and then the above-mentioned operations are repeatedly performed from Step 8 until the sequence count is equal to the prescribed limit value.

### Path selector control routine of the main control unit

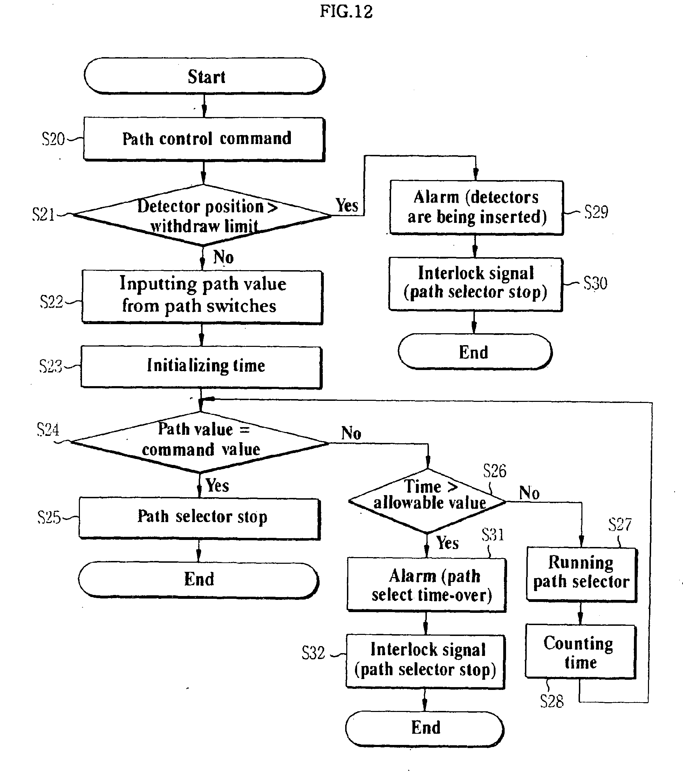

FIG. 12 is a flowchart illustrating a path selector control routine of the main control unit according to the present invention.

As shown in FIG. 12, the path selector control module 525 selects detector paths in response to a path control command inputted manually or automatically from the main control module 520, and determines the current position of the detectors inserted through the detector paths (S21).

When it is determined that the current position of the detectors is larger than a withdraw limit at Step 21, an alarm informing that the detectors are being inserted is generated (S29), and a path selector stop interlock signal is generated (S30).

When it is determined that the current position of the detectors is smaller than a withdraw limit at Step 21, the current path of the detectors is inputted to the path selector control module 525 from the path switches in the path selector (S22), and the time is initialized (S23).

Then, it is determined whether the value inputted from the path switches is equal to a path command value or not (S24). When it is determined that the value inputted from the path switches is equal to the path command value, the path selector is stopped (S25).

When it is determined that the value inputted from the path switches is not equal to the path command value, on the other hand, a comparison is made between the initialized time and a prescribed allowable value to determine whether the initialized time is larger than the prescribed allowable value or not (S26).

When it is determined that the initialized time is smaller than the prescribed allowable value at Step S26, the path selector is operated (S27). At this time, the time is counted (S28) so that the path selector can be operated for a prescribed period of time.

When it is determined that the initialized time is larger than the prescribed allowable value at Step S26, on the other hand, an alarm signal informing that the path select time is over (i.e., a path select time-over alarm) is generated (S31), and a path selector stop interlock signal is generated (S32).

### Insert control routine of the main control unit

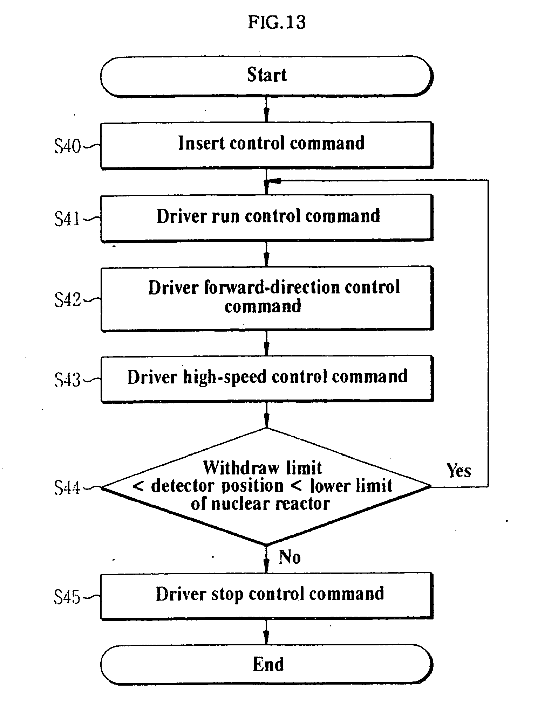

FIG. 13 is a flowchart illustrating an insert control routine of the main control unit according to the present invention.

As an insert control command of the detectors is issued manually or automatically by means of the main control module 520 (S40), and a driver run control command, a driver forward-direction control command, and a driver high-speed control command are issued (S41 - S43), as shown in FIG. 13, the insert control module 530 senses the current position of the detectors using the field sensors 910 and detector position transmitter 940 while the insert control module 530 controls the drivers so that the drivers can run in a forward direction at high speed, and compares the current position of the detectors with a prescribed limit value (S44). When the current position of the detectors is larger than the withdraw limit value and smaller than the lower limit value of the nuclear reactor at Step S44, the procedure returns to Step S41, and then the drivers are controlled so that the above-mentioned operations are repeatedly performed from Step S41. When the current position of the detectors is smaller than the withdraw limit value and larger than the lower limit value of the nuclear reactor at Step S44, on the other hand, a control command is outputted so that the drivers are stopped (S45) .

### Scan control routine of the main control unit

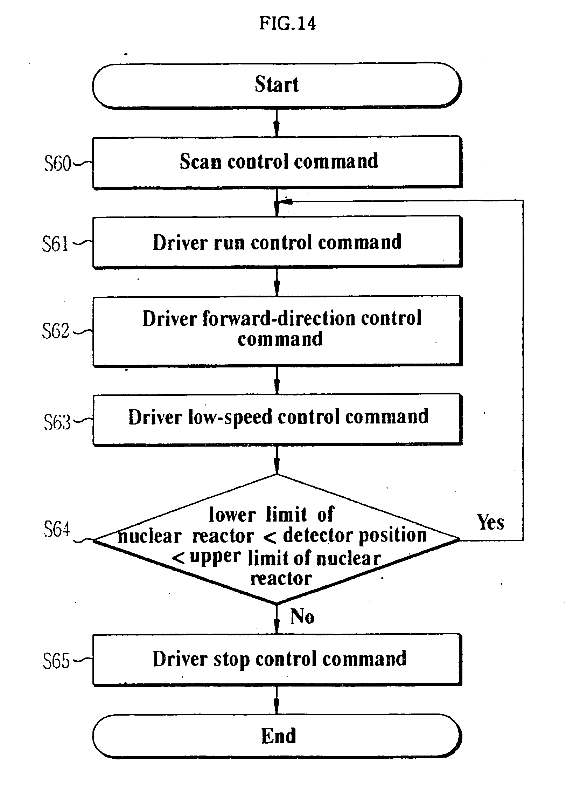

FIG. 14 is a flowchart illustrating a scan control routine of the main control unit according to the present invention.

As a scan control command of the detectors is issued manually or automatically by means of the main control module 520 (S60), and a driver run control command, a driver forward-direction control command, and a driver low-speed control command are issued (S61 - S63), as shown in FIG. 14, the scan control module 535 enables the detectors to scan the inside of the nuclear reactor while the scan control module 535 controls the drivers so that the drivers can run in a forward direction at low speed, senses the current position of the detectors using the field sensors 910 and detector position transmitter 940, and compares the current position of the detectors with a prescribed limit value (S64). When the current position of the detectors is larger than the lower limit value of the nuclear reactor and smaller than the upper limit value of the nuclear reactor at Step S64, the procedure returns to Step S61, and then the drivers are controlled so that the above-mentioned operations are repeatedly performed from Step S61. When the current position of the detectors is smaller than the lower limit value of the nuclear reactor and larger than the upper limit value of the nuclear reactor at Step S64, on the other hand, a control command is outputted so that the drivers are stopped (S65).

### Record control routine of the main control unit

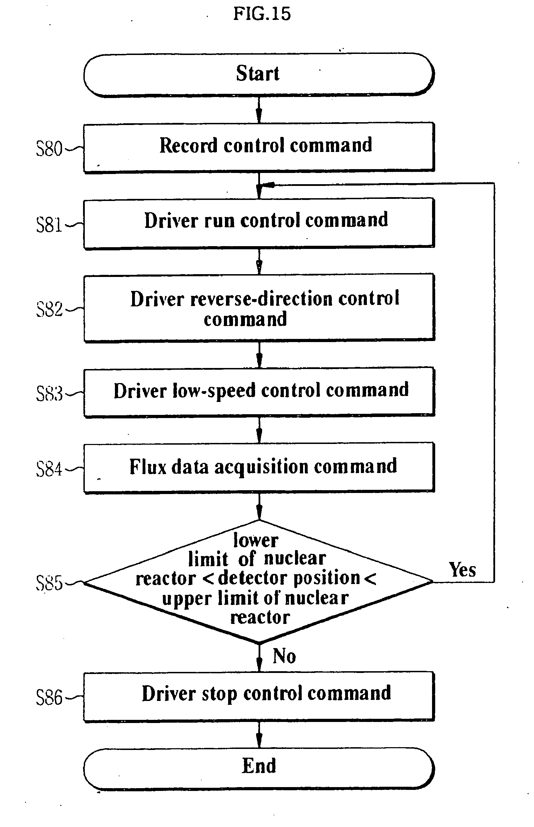

FIG. 15 is a flowchart illustrating a record control routine of the main control unit according to the present invention.

As a record control command of the detectors is issued manually or automatically by means of the main control module 520 (S80), and a driver run control command, a driver reverse-direction control command, a driver low-speed control command, and a flux data acquisition command are issued (S81 - S84), as shown in FIG. 15, the record control module 540 enables data acquired by means of the detectors to be received and recorded while the record control module 540 controls the drivers so that the drivers can run in a reverse direction at low speed, senses the current position of the detectors using the field sensors 910 and detector position transmitter 940, and compares the current position of the detectors with a prescribed limit value (S85). When the current position of the detectors is larger than the lower limit value of the nuclear reactor and smaller than the upper limit value of the nuclear reactor at Step S85, the procedure returns to Step S81, and then the drivers are controlled so that the above-mentioned operations are repeatedly performed from Step S81, and thus the record operation of the detectors can be continuously carried out. When the current position of the detectors is smaller than the lower limit value of the nuclear reactor and larger than the upper limit value of the nuclear reactor at Step S85, on the other hand, a control command is outputted so that the drivers are stopped (S86).

### Withdraw control routine of the main control unit

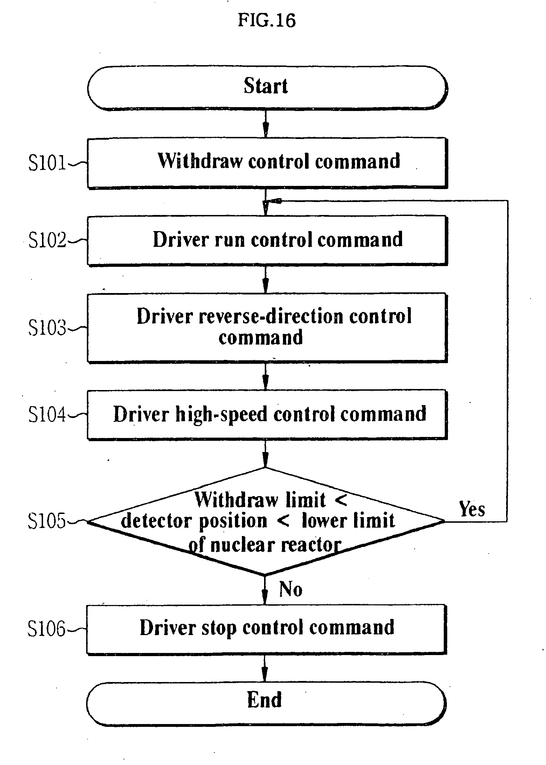

FIG. 16 is a flowchart illustrating a withdraw control routine of the main control unit according to the present invention.

As a withdraw control command of the detectors is issued manually or automatically by means of the main control module 520 (S101), and a driver run control command, a driver reverse-direction control command, and a driver high-speed control command are issued (S102 - S104), as shown in FIG. 16, the withdraw control module 545 senses the current position of the detectors using the field sensors 910 and detector position transmitter 940 while the withdraw control module 545 controls the drivers so that the drivers can run in a reverse direction at high speed, and compares the current position of the detectors with a prescribed limit value (S105). When the current position of the detectors is larger than the withdraw limit value and smaller than the lower limit value of the nuclear reactor at Step S105, the procedure returns to Step S102, and then the drivers are controlled so that the above-mentioned operations are repeatedly performed from Step S102. When the current position of the detectors is smaller than the withdraw limit value and larger than the lower limit value of the nuclear reactor at Step S105, on the other hand, a control command is outputted so that the drivers are stopped (S106).

### Driver run/stop control routine of the main control unit

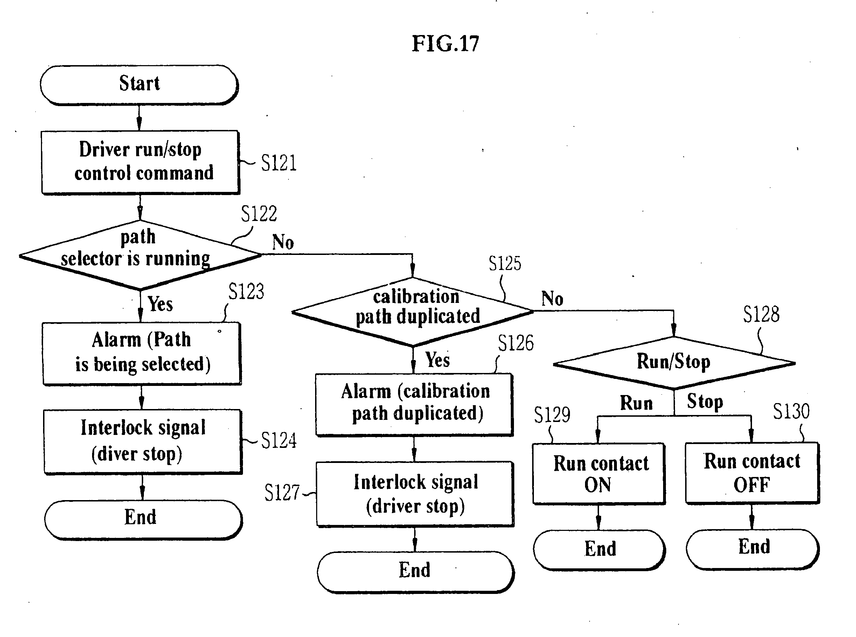

FIG. 17 is a flowchart illustrating a driver run/stop control routine of the main control unit according to the present invention.

As a driver run/stop control command is issued manually or automatically by means of the main control module 520 (S121), as shown in FIG. 17, it is determined by the driver run/stop control module 550 whether the path selector is running or not (S122).

When it is determined that the path selector is running at Step S122, the driver run/stop control module 550 generates an alarm (S123), and outputs a driver stop interlock signal (S124).

When it is determined that the path selector is not running at Step S122, on the other hand, the driver run/stop control module 550 determines whether a calibration path is set in duplicate or not (S125). When it is determined that the calibration path is set in duplicate, the driver run/stop control module 550 generates an alarm (S126), and outputs a driver stop interlock signal (S127).

When it is determined that the calibration path is not set in duplicate at Step S125, the driver run/stop control module 550 turns on a run contact in the case that the command from the main control module 520 is a run command of the detectors (S129), and turns off the run contact in the case that the command from the main control module 520 is a stop command for the detectors (S130).

### Driver direction control routine of the main control unit

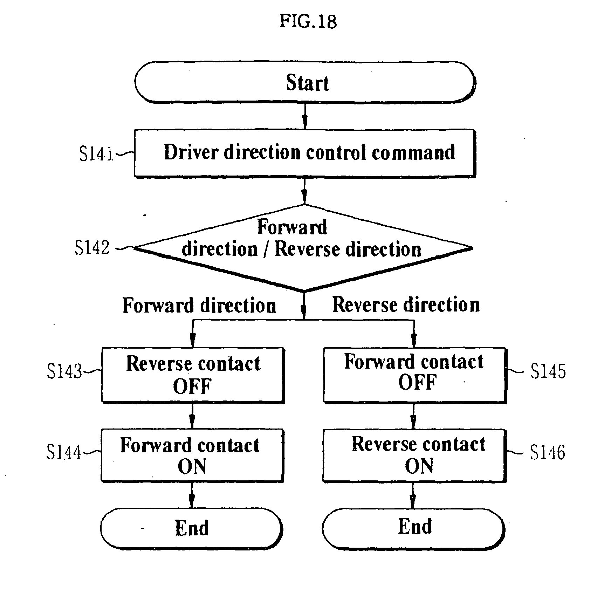

FIG. 18 is a flowchart illustrating a driver direction control routine of the main control unit according to the present invention.

As a driver direction control command is issued manually or automatically by means of the main control module 520 (S141), as shown in FIG. 18, it is determined by the driver direction control module 555 whether a forward rotation command of the drivers is inputted or a reverse rotation command of the drivers is inputted (S142).

When it is determined that the forward rotation command of the drivers is inputted at Step S142, the driver direction control module 555 enables a reverse contact to be turned off (S143) and a forward contact to be turned on (S144) so that the drivers can be rotated in a forward direction. When it is determined that the reverse rotation command of the drivers is inputted at Step S142, on the other hand, the driver direction control module 555 enables the forward contact to be turned off (S145) and the reverse contact to be turned on (S146) so that the drivers can be rotated in a reverse direction.

### Driver speed control routine of the main control unit

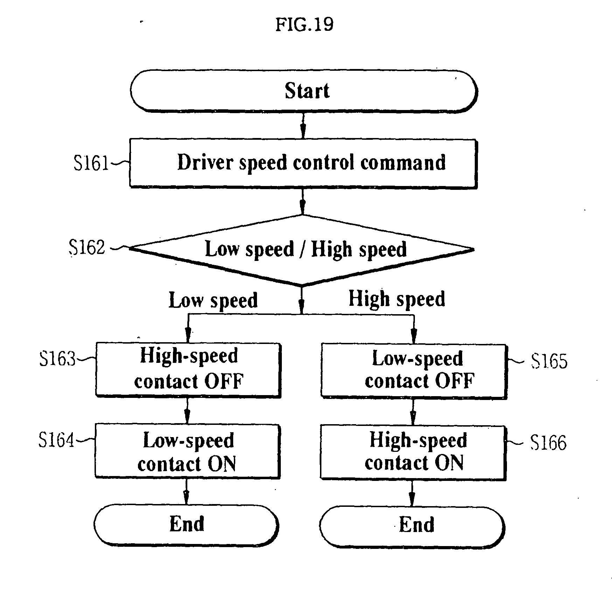

FIG. 19 is a flowchart illustrating a driver speed control routine of the main control unit according to the present invention.

As a driver speed control command is issued manually or automatically by means of the main control module 520 (S161), as shown in FIG. 19, it is determined by the driver speed control module 560 whether a high-speed rotation command of the drivers is inputted or a low-speed rotation command of the drivers is inputted (S162).

When it is determined that the low-speed rotation command of the drivers is inputted at Step S162, the driver speed control module 560 enables a high-speed contact to be turned off (S163) and a low-speed contact to be turned on (S164) so that the drivers can be rotated at low speed. When it is determined that the high-speed rotation command of the drivers is inputted at Step S162, on the other hand, the driver speed control module 560 enables the low-speed contact to be turned off (S165) and the high-speed contact to be turned on (S166) so that the drivers can be rotated at high speed.

### Flux data acquisition routine of the main control unit

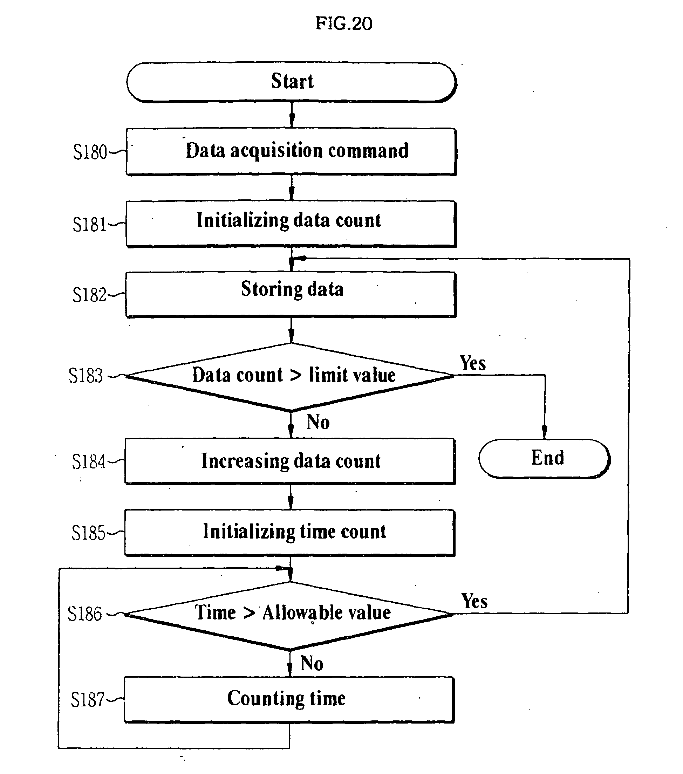

FIG. 20 is a flowchart illustrating a flux data acquisition routine of the main control unit according to the present invention.

When a flux data acquisition command is issued manually or automatically by means of the main control module 520 (S180), as shown in FIG. 20, the flux data acquisition module 565 initializes a data count corresponding to the total number of the flux data units (S181), acquires and stores data units one by one (S182).

Subsequently, it is determined by the flux data acquisition module 565 whether the data count is above a prescribed limit value or not (S183). When it is determined that the data count is above the prescribed limit value at Step S183, the data acquisition routine is finished (all data has been acquired). When it is determined that the data count is below the prescribed limit value at Step S183, on the other hand, the flux data acquisition module 565 increases the data count (S184), initializes a time count (S185), and determines whether time is above a prescribed allowable value or not (S186).

When it is determined that the time is below the prescribed allowable value at Step S186, the flux data acquisition module 565 repeatedly carries out Step S186 while counting time (S187). When it is determined that the time is above the prescribed allowable value at Step S186, on the other hand, the flux data acquisition module 565 repeatedly carries out Step S182 to continuously collect flux data from the detectors.

### Detector speed diagnosis routine of the main control unit

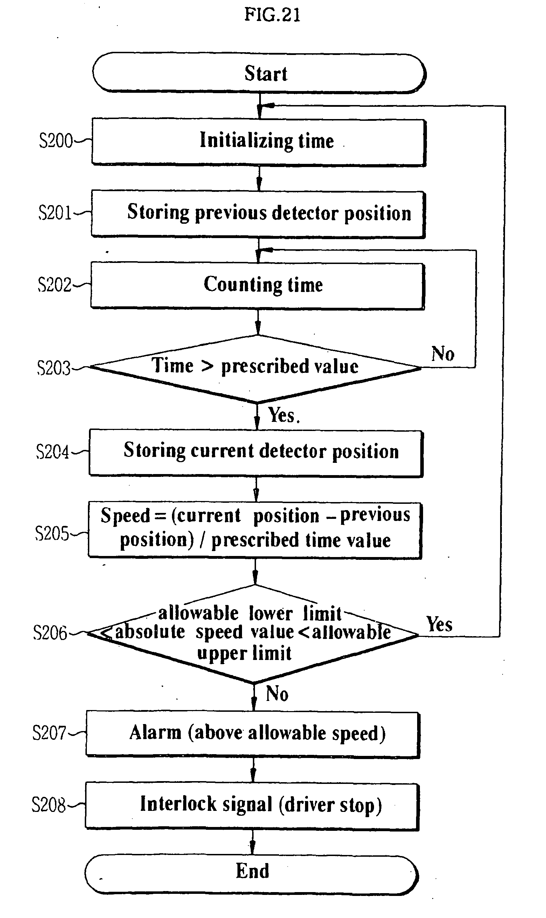

FIG. 21 is a flowchart illustrating a detector speed diagnosis routine of the main control unit according to the present invention.

As shown in FIG. 21, the detector speed diagnosis module 570 initializes time (S200), and stores a previous detector position (S201).

Subsequently, the detector speed diagnosis module 570 counts time (S202), and determines whether the time is above a prescribed value or not (S203). When it is determined that the time is below the prescribed value at Step S203, the detector speed diagnosis module 570 carries out Step 202 so that it is delayed for a prescribed period of time.

When it is determined that the time is above the prescribed value at Step S203, on the other hand, the detector speed diagnosis module 570 stores a current detector position inputted from the detector position transmitter 940 (S204), subtracts the previous detector position value from the current detector position value, divides the subtraction result value by the prescribed time, calculates the divided result value, i.e., the speed value of the detectors as an absolute speed value (S205).

Next, the detector speed diagnosis module 570 determines whether the absolute speed value is larger than an allowable lower limit value and smaller than an allowable upper limit value (S206). When it is determined that the absolute speed value is smaller than the allowable lower limit value and larger than the allowable upper limit value at Step 206, the detector speed diagnosis module 570 generates an alarm signal (S207), and outputs a driver stop interlock signal (S208).

When it is determined that the absolute speed value is larger than the allowable lower limit value and smaller than the allowable upper limit value at Step 206, on the other hand, the detector speed diagnosis module 570 repeatedly carries out the procedure from Step S200.

### Detector no-motion diagnosis routine of the main control unit

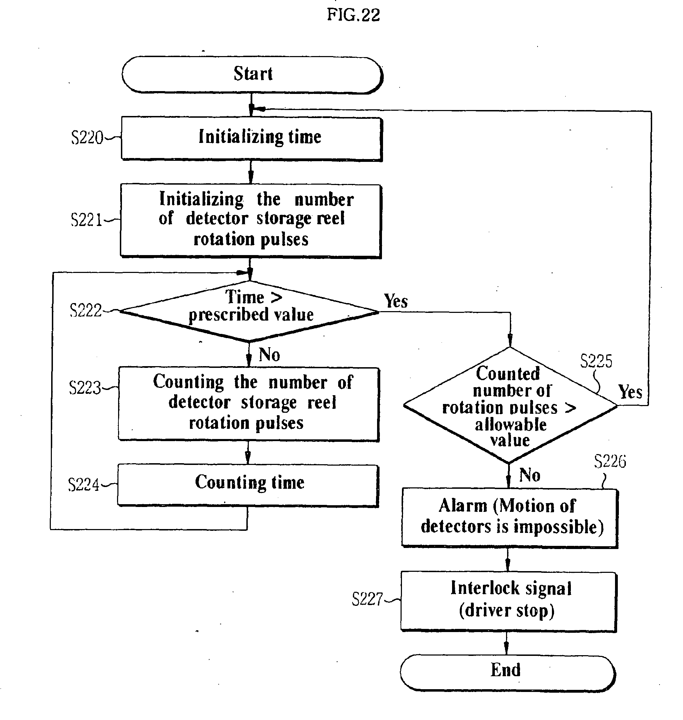

FIG. 22 is a flowchart illustrating a detector no-motion diagnosis routine of the main control unit according to the present invention.

As shown in FIG. 22, the detector no-motion diagnosis module 575 initializes time and the number of detector storage reel rotation pulses (S220 and S221), and determines whether the time is larger than a prescribed value (S222).

When it is determined that the time is smaller than the prescribed value at Step S222, the detector no-motion diagnosis module 575 counts the number of detector storage reel rotation pulses (S223), and then counts time (S224). Subsequently, Step S222 is carried out again so that it is determined by the detector no-motion diagnosis module 575 whether the counted time is larger than the prescribed value or not.

In the case that the counted time is larger than the prescribed value, it is determined by the detector no-motion diagnosis module 575 whether the counted number of the rotation pulses is larger than a prescribed allowable value or not (S225). When it is determined that the counted number of the rotation pulses is smaller than the prescribed allowable value at Step S225, the detector no-motion diagnosis module 575 generates an alarm signal (S226), and outputs a driver stop interlock signal (S227). When it is determined that the counted number of the rotation pulses is larger than the prescribed allowable value at Step S225, on the other hand, the detector no-motion diagnosis module 575 repeatedly carries out the procedure from Step S220.

### Path verification routine of the main control unit

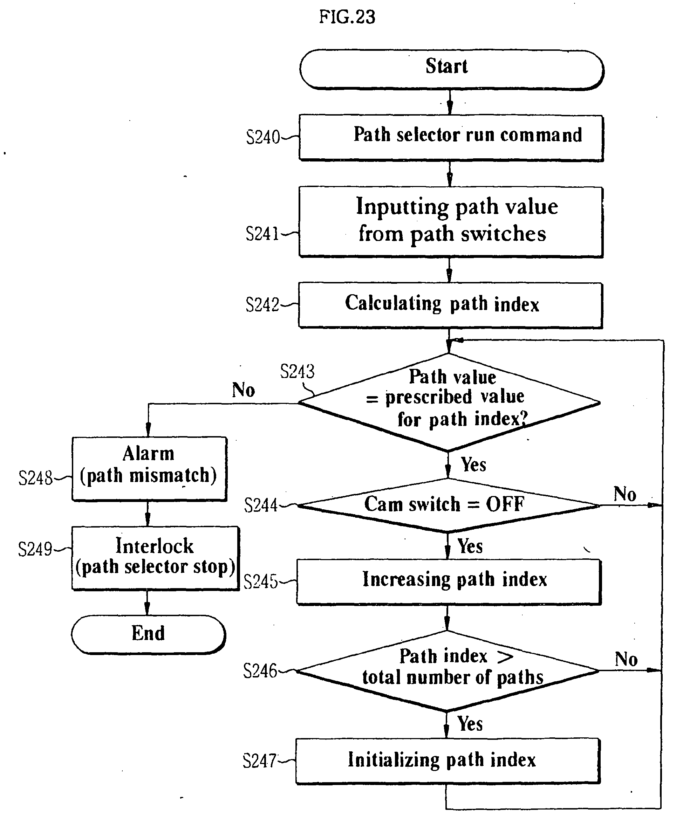

FIG. 23 is a flowchart illustrating a path verification routine of the main control unit according to the present invention.

As a path selector run command is issued (S240), as shown in FIG. 23, the path verification module 580 calculates a path index (S242) corresponding to the current path detected by means of the path switches in the path selector (S241), and determines whether the combination code of the path switches is equal to a prescribed code value or not for each path index (S243).

When it is determined that the combination code of the path switches is not equal to the prescribed code value at Step S243, the path verification module 580 considers that the path selector is electrically or mechanically defective, and therefore generates a path mismatch alarm (S248) and outputs a path selector stop interlock signal (S249) .

When it is determined that the combination code of the path switches is equal to the prescribed code value at Step S243, on the other hand, Step S243 is repeatedly carried out provided that the inputted value of a path selector cam switch, which is designed to be turned off when each path selection is completed, is "on". When the inputted value of the cam switch is "off", the path index is increased (S245), and it is determined whether the path index is larger than the total number of paths (S246).

When it is determined that the position index is smaller than the total number of paths at Step S246, Step S243 is repeatedly carried out. When it is determined that the position index is larger than the total number of paths at Step S246, on the other hand, the position index is initialized (S237), and Step S243 is repeatedly carried out.

### User interface screen of the operation console

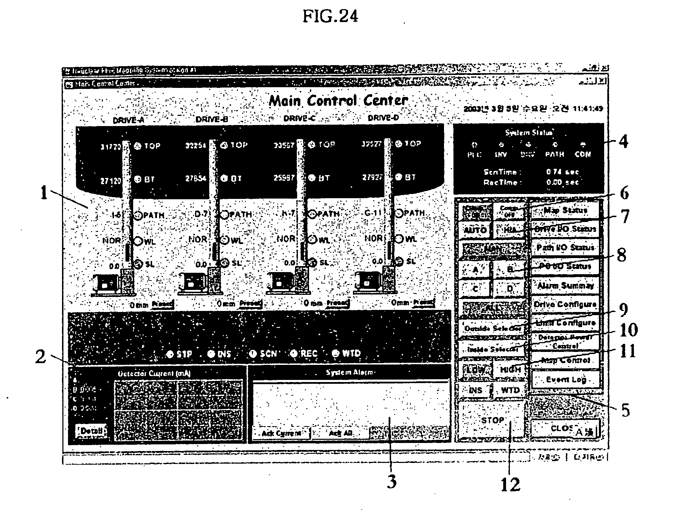

FIG. 24 is a view showing a manual mode operation screen of the operation console according to the present invention.

As shown in FIG. 24, the manual mode operation screen is a user interface screen provided to an operator through the operation console 200 when the operator is to perform necessary operations in a manual mode. The manual mode operation screen comprises an operation status display section 1, on which work groups, work paths, operation modes, and sensor operations are displayed, a detector current display section 2, a system alarm display section 3, a system status display section 4, an operation indicating section 5, computer on/off select buttons 6, automatic/semi-automatic/manual mode select buttons 7, driver A/B/C/D select buttons 8, an outside path selector operation screen call button 9, an inside path selector operation screen call button 10, speed select buttons 11, insert/stop/withdraw select buttons 12. In the manual mode, the operator manually specifies the driver direction select, the driver speed select, and the detector path select, all of which are specified to drive the detectors as described above. In the manual mode, the operation can be carried out irrespective of upper and lower limit values of the nuclear reactor. The manual mode is suitable when functions of the detectors, the drivers, and the path selector are to be simply tested, when the detectors are to be operated to verify the upper and lower limit values of the nuclear reactor, or when emergency operation is to be carried out on the basis of the determination of the operator.

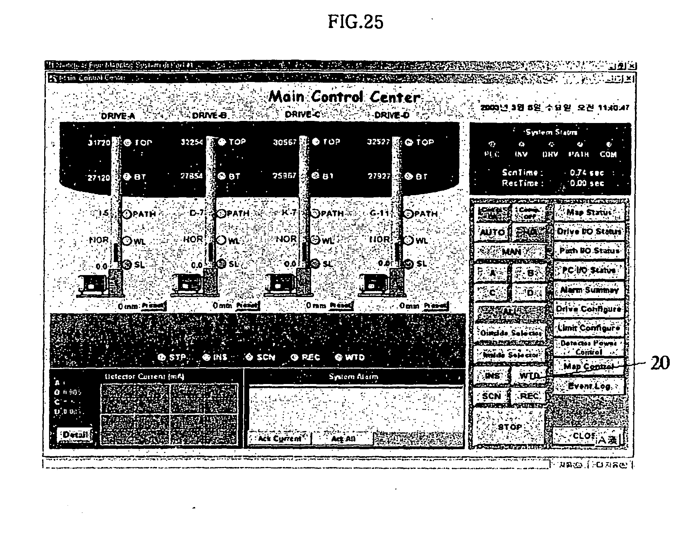

FIG. 25 is a view showing a semi-automatic mode operation screen of the operation console according to the present invention.

As shown in FIG. 25, the semi-automatic mode operation screen is a user interface screen provided to an operator through the operation console 200 when the operator is to perform necessary operations in a semi-automatic mode. The semi-automatic mode operation screen includes insert/scan/record/stop select buttons 20. In the semi-automatic mode, the operator manually specifies selection of the detector paths, through which the detectors are to be inserted, and operation of the detectors by sections, as described above. After the selection of the detector paths, the insert, scan, record, and withdraw operations of the detectors are partially automatically carried out according to the upper and lower limit values of the nuclear reactor. At this time, the direction and speed of the detectors are automatically selected on the basis of modes. The semi-automatic mode is suitable when any supplementary work is necessary after works have been finished according to the automatic mode operation or it is difficult to carry out the automatic mode operation.

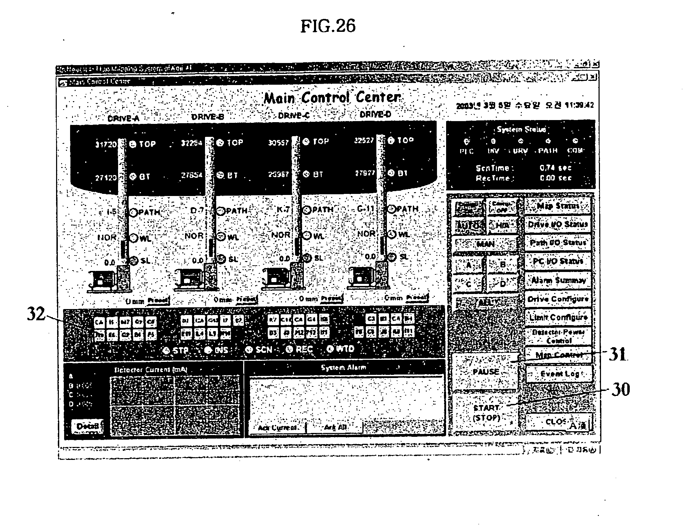

FIG. 26 is a view showing an automatic mode operation screen of the operation console according to the present invention.

As shown in FIG. 26, the automatic mode operation screen is a user interface screen provided to an operator through the operation console 200 when the operator is to perform necessary operations in an automatic mode. The automatic mode operation screen includes a start/stop button 30, a pause button 31, and a work progress display window 32. When the start button is pressed in the automatic mode, the selection of the detector paths, and the insert, scan, record, and withdraw operations of the detectors are carried out automatically according to operation control information previously set by the operator through the operation console 200.

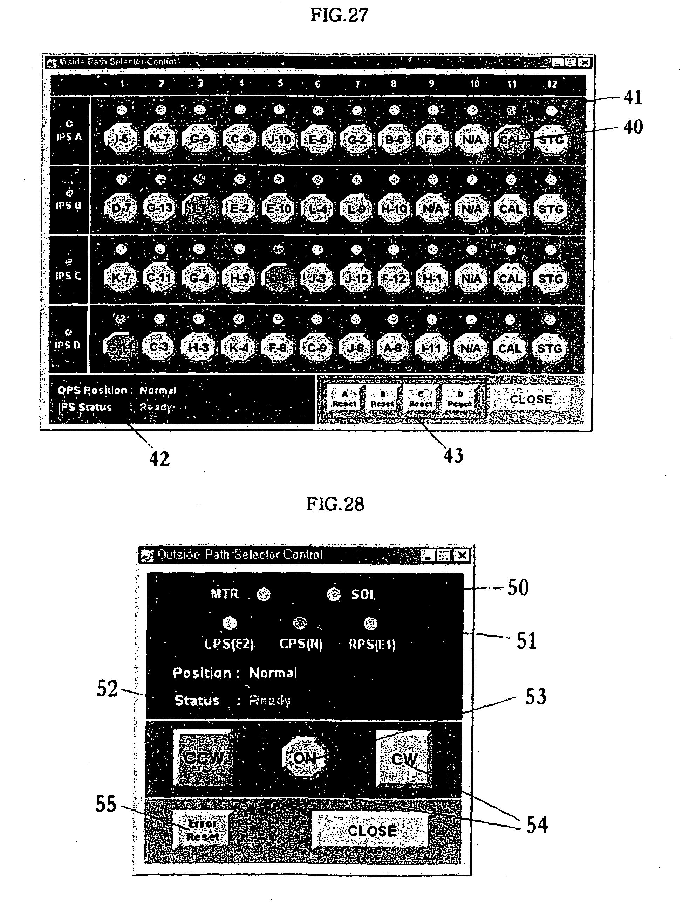

FIG. 27 is a view showing an inside path selector operation screen of the operation console according to the present invention.

As shown in FIG. 27, the inside path selector operation screen is a user interface screen provided to an operator through the operation console 200 when the operator is to manually operate the inside path selector. The inside path selector operation screen includes path select buttons 40, position indicating lamps 41, a status information display section 42, and time-out reset buttons 43. Twelve paths are provided in all. Ten work paths, a calibration path, and a storage paths can be selected by groups. The inside path selector operation screen is suitably used when path changing works are to be carried out in the manual mode or in the semi-automatic mode.

FIG. 28 is a view showing an outside path selector operation screen of the operation console according to the present invention.

As shown in FIG. 28, the outside path selector operation screen is a user interface screen provided to an operator through the operation console 200 when the operator is to manually operate the outside path selector. The outside path selector operation screen includes instrument operation lamps 50, position indicating lamps 51, a status information display section 52, a run button 53, direction select button 54, and a time-out reset button 55. The inside path selectors, four in all, are individually rotated in a clockwise direction or in a counterclockwise direction so that each detector can perform nuclear measuring in an adjacent work group in addition to the original work group. The outside path selector provides a normal mode, a first emergency mode, a second emergency mode, and a third emergency mode on the basis of rotated positions of the inside path selectors.

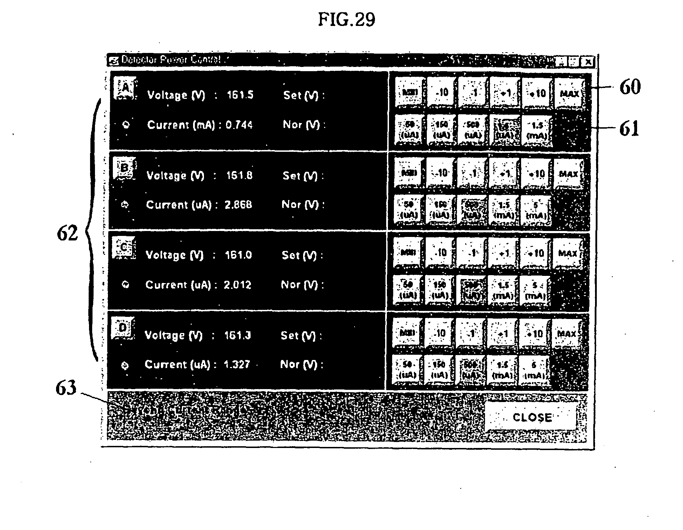

FIG. 29 is a view showing a detector power supply unit operation screen of the operation console according to the present invention.

As shown in FIG. 29, the detector power supply unit operation screen is a user interface screen provided to an operator through the operation console 200 when the operator is to set the voltage of power supplied to the detectors, and simultaneously to display the measured current data. The detector power supply unit operation screen includes voltage set buttons 60, current range set buttons 61, status information display sections 62, and an alarm display section 63.

### Flux data processing routine of the operation console

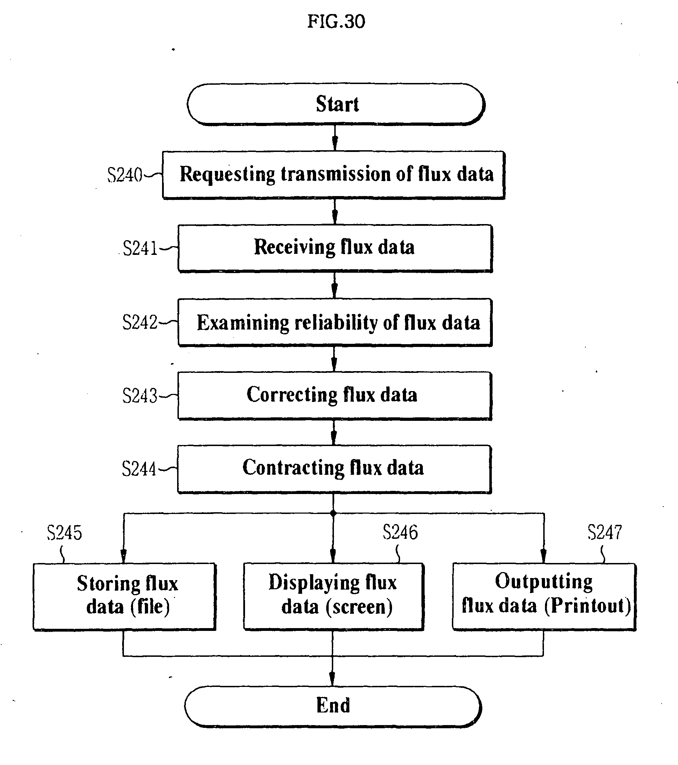

FIG. 30 is a flowchart illustrating a flux data processing routine of the operation console according to the present invention.

As shown in FIG. 30, the flux data processing routine is a routine that is automatically carried out during operation to process flux data collected by means of the operation console 200. Flux data is collected from the main control unit 500 through the data transceiver module 232 (S240 - S241), and reliability of the flux data is examined (S242). The flux data is corrected (S243), and is then contracted (S244). Finally, the flux data is stored in the form of a file, a graph, or a numeral so that the flux data is stored (S245), displayed (S246) or outputted (S247).

The operating system routines used in the main control unit 500 and the operation console 200 are separated from one another by detailed functions. Also, the process of each routine is defined by the event driven system. Consequently, the present invention does not need an operation initialization set procedure due to change of the operation mode, which is necessary for the procedure driven system, in various operation conditions caused in the manual mode, the semi-automatic mode, and the automatic mode, whereby it is possible for an operator to operate more easily and conveniently.

As apparent from the above description, the present invention provides a digital control system and method for neutron flux mapping systems that is capable of realizing an operation panel of the neutron flux mapping systems, which is provided for acquiring distribution data of a plurality of neutrons inside a nuclear reactor to verify the operating conditions of the nuclear reactor, as an open-ended and standardized system that can be easily maintained and upgraded, providing a graphic user interface (GUI)-based operation interface, and realizing the operation panel of the neutron flux mapping systems on the basis of an event driven operating system so that the operation panel has an operation diagnosis function, an alarm function, and an interlock function as well as an automatic operation function, thereby improving convenience and reliability of the operation.

## Claims

1. A digital control system for neutron flux mapping systems that enables a plurality of detectors (23) driven by means of a plurality of drivers (22), respectively, to be inserted into a nuclear reactor (40) in regular sequence through detector paths (30) selected by means of a detector path selector (24) so that distribution of neurons inside the nuclear reactor is measured to verify the current status of the nuclear reactor (40), wherein the digital control system comprises:
operation means (10) for outputting an operation control signal using operation information manually set by an operator or prescribed operation information, and collecting and administering flux data transmitted in response to the operation control signal; and
main control means (21) for
enabling the detectors (23) to be inserted or withdrawn in a prescribed speed and direction through the detector paths (30) in response to the operation control signal of the operation means (10),
collecting and storing neutron distribution data inside the nuclear reactor measured by means of the detectors (23), and
transmitting the neutron distribution data to the operation means (10), **characterised in that** the main control means (21) include
a main control module (520) for
determining whether a manual mode, a semi-automatic mode, or an automatic mode is selected,
controlling the path selector (24) according to a path control command inputted by the operator and
controlling the drivers (22) according to a driver run/stop control command, a driver direction control command, and a driver speed control command inputted by the operator when the manual mode is selected,
controlling the path selector (24) according to a path control command inputted by the operator and controlling the drivers (22) partially automatically according to an insert control command, a scan control command, a record control command, and a withdraw control command inputted by the operator when the semi-automatic mode is selected,
initializing a sequence count to determine whether an external interrupt signal exists when the automatic mode is selected,
finishing the operation when the external interrupt signal exists, automatically generating a path control command according to a prescribed work sequence to control the path selector (24) and automatically generating an insert control command, a scan control command, a record control command, and a withdraw control command according to a prescribed operation sequence to control the drivers (22) when the external interrupt signal does not exist,
finishing the work when the sequence count is larger than a prescribed limit value, and
increasing the sequence count so that the operation is repeatedly performed according to a next work sequence when the sequence count is not larger than the prescribed limit value.

2. The digital control system of claim 1 wherein the digital control system further comprises:
a data communication network (100);
operation means (200) for
collecting and administering work status information, an alarm, and flux data received through the data communication network (100) in response to the operation control signal, and
outputting the collected and administrated operation status information, alarm, and flux data on a screen;
monitoring means (300), having the same construction as the operation means (200), for monitoring the work status through the data communication network at a remote area,
the monitoring means (300) being exclusively usable as the operation means in case of emergency;
core physics calculation means (400) for analyzing the status of a core of the nuclear reactor using the flux data received through the data communication network (100); and
main control means (500) for
comparing work status information carried out in response to the operation control signal with an allowable value or a limit value set as the operation information to diagnose the operation status information,
outputting an interlock signal and an alarm signal to protect the instruments when an abnormal condition occurs,
storing the neutron distribution data as flux data,
wherein said prescribed operation information is outputted through the data communication network (100),
transmitting the work status information, the alarm, and the flux data through the data communication network (100).

3. The system as set forth in claim 1 or 2, further comprising:
auxiliary control means (600) for enabling the detectors to be emergently inserted or emergently withdrawn in a prescribed speed and direction through the detector paths in a manual mode when the main control means is not available.

4. The system as set forth in claim 1 or 2, further comprising:
a plurality of acoustic sensors (710) attached to the drivers and the path selector for sensing and
outputting the sound signal of the drivers and of the path selector; and
field sound control means (700) for processing the detected signal inputted from the acoustic sensors so that the sounds are outputted through a speaker.

5. The system as set forth in claim 1, wherein the main control means includes a path selector control module (525) for selecting a detector path in response to a path control command inputted manually or automatically from the main control module (520), generating an alarm informing that the detectors are inserted and a path selector stop interlock signal when the current position of the detectors is verified by means of the detector position transmitter and it is determined that the current position of the detectors is above a withdraw limit, receiving the current path of the detectors from the path switches in the path selector, and driving the path selector until the value inputted from the path switches is equal to a manually or automatically set path command value.

6. The system as set forth in claim 5, wherein the path selector control module (525) counts an operation time after the path selector is driven, and generates a path select time-over alarm and a path selector stop interlock signal so that the path selector (24) is not driven when the counted operation time is above a prescribed allowable value.

7. The system as set forth in claim 1, wherein the main control means includes an insert control module (530) for detecting the current position of the detectors (23) through the use of field sensors (910) and detector position transmitter (940) while enabling the drivers (22) to run in a forward direction at high speed when an insert command of the detectors (23) is issued manually or automatically from the main control module (520), enabling the insertion operation of the detectors to be continuously carried out when the current position of the detectors (23) is larger than a withdraw limit value and smaller than the lower limit value of the nuclear reactor, and enabling the drivers (22) to be stopped when the current position of the detectors (23) is smaller than the withdraw limit value or larger than the lower limit value of the nuclear reactor.

8. The system as set forth in claim 1, wherein the main control means includes a scan control module (535) for enabling the detectors (23) to scan the inside of the nuclear reactor while enabling the drivers (22) to run in a forward direction at low speed and detects the current position of the detectors through the use of field sensors (910) and detector position transmitter (940) when a scan command of the detectors is issued manually or automatically from the main control module (520), enabling the scan operation of the detectors to be continuously carried out when the current position of the detectors is larger than the lower limit value of the nuclear reactor and smaller than the upper limit value of the nuclear reactor, and enabling the drivers to be stopped when the current position of the detectors is smaller than the lower limit value of the nuclear reactor and larger than the upper limit value of the nuclear reactor.

9. The system as set forth in claim 1, wherein the main control means includes a record control module (540) for enabling data acquired by means of the detectors (23) to be received and recorded while enabling the drivers (22) to run in a reverse direction at low speed and detecting the current position of the detectors through the use of field sensors (910) and detector position transmitter (940) when a record command of the detectors is issued manually or automatically from the main control module (520), enabling the record operation of the detectors to be continuously carried out when the current position of the detectors is larger than the lower limit value of the nuclear reactor and smaller than the upper limit value of the nuclear reactor, and enabling the drivers to be stopped when the current position of the detectors is smaller than the lower limit value of the nuclear reactor and larger than the upper limit value of the nuclear reactor.

10. The system as set forth in claim 1, wherein the main control means includes a withdraw control module (545) for enabling the detectors (23) to be withdrawn while enabling the drivers (22) to run in a reverse direction at high speed and detecting the current position of the detectors through the use of field sensors (910) and detector position transmitter (940) when a withdraw command of the detectors is issued manually or automatically from the main control module (520), enabling the scan operation of the detectors to be continuously carried out when the current position of the detectors is larger than a withdraw limit value and smaller than the lower limit value of the nuclear reactor, and enabling the drivers to be stopped when the current position of the detectors is smaller than the withdraw limit value and larger than the lower limit value of the nuclear reactor.

11. The system as set forth in claim 1, wherein the main control means includes a driver run/stop control module (550) for determining whether the path selector (24) is running or not when a run/stop command of the drivers (22) is issued manually or automatically from the main control module (520), generating an alarm and outputting a driver stop interlock signal when the path selector is running, determining whether a calibration path is set in duplicate or not when the path selector is not running, generating an alarm and a driver stop interlock signal when the calibration path is set in duplicate, turning on a run contact in the case that the command from the main control module is a run command when the calibration path is not set in duplicate, and turning off the run contact in the case that the command from the main control module is a stop command when the calibration path is not set in duplicate.

12. The system as set forth in claim 1, wherein the main control means includes:
a driver direction control module (555) for enabling a forward contact to be turned on so that the drivers (22) can be rotated in a forward direction when a forward rotation command of the drivers is inputted manually or automatically from the main control module (520), and enabling a reverse contact to be turned off so that the drivers (22) can be rotated in a reverse direction when a reverse rotation command of the drivers is inputted manually or automatically from the main control module (520), and
a driver speed control module (650) for enabling a low-speed contact to be turned on so that the drivers (22) can be rotated at low speed when a low-speed rotation command is inputted manually or automatically from the main control module (520), and enabling a high-speed contact to be turned on so that the drivers can be rotated at high speed when a high-speed rotation command is inputted manually or automatically from the main control module.

13. The system as set forth in claim 1, wherein the main control means includes a flux data acquisition module (565) for initializing a data count corresponding to the total number of the flux data units, acquiring and storing data units one by one, increasing the data count, and enabling a data acquisition routine to be finished when the data count is above a prescribed limit value.

14. The system as set forth in claim 13, wherein the flux data acquisition module (565) is operated so that the data acquisition is carried out by a user or by units of a prescribed data acquisition time.

15. The system as set forth in claim 1, wherein the main control means includes a detector speed diagnosis module (570) for storing a detector position inputted from the detector position transmitter (940) by units of a prescribed period, subtracting the previous detector position value from the current detector position value, dividing the subtraction result value by a prescribed time, calculating the divided result speed value of the detectors (23) as an absolute speed value, comparing the absolute speed value with an allowable lower limit value and an allowable upper limit value, and generating an alarm and outputting a driver stop interlock signal when the absolute speed value is smaller than the allowable lower limit value and larger than the allowable upper limit value.

16. The system as set forth in claim 1, wherein the main control means includes a detector no-motion diagnosis module (575) for initializing the time and the number of detector storage reel rotation pulses, counting the detector storage reel rotation pulses for a prescribed period of time, continuously performing a detector no-motion diagnosis routine when the number of the rotation pulses is larger than an allowable value, and generating an alarm and outputting a driver stop interlock signal when the number of the rotation pulses is smaller than an allowable value.

17. The system as set forth in claim 1, wherein the main control means includes a path verification module (580) for calculating a path index corresponding to the current path of the detectors using the path switches in the path selector simultaneously when the path selector is operated, determining whether the combination code of the path switches is equal to a prescribed code value for each path index, and considering that the path selector is electrically or mechanically defective and therefore generating a path mismatch alarm and outputting a path selector stop interlock signal when the combination code of the path switches is not equal to the code value.

18. The system as set forth in claim 1 or 2, wherein the operation means comprises:
a user interface module (231) having a user interface screen for allowing the operator to input operation information thereon;
a data transceiver module (232) for transmitting an operation control signal inputted on the user interface screen to the main control means in response to the request of the operation and receiving work status information, an alarm, and flux data from the main control means in response to the operation control signal; and
a flux data processing module (233) for collecting the flux data to examine reliability of the flux data, correcting and contracting the examined flux data, and generating the corrected and contracted flux data in the form of a file, a graph, or a numeral so that the flux data is stored, displayed or outputted.

19. The system as set forth in claim 18, wherein the user interface module (231) has an automatic mode operation screen for automatically selecting detector paths from all flux paths inside the nuclear reactor according to a work sequence prescribed by groups in the automatic operation mode, inserting the detectors into the automatically selected detector paths, scanning and recording the detectors, withdrawing the detectors from the automatically selected detector paths, automatically controlling the voltage of the detectors, and automatically processing the collected flux data.

20. The system as set forth in claim 18, wherein the user interface module (231) has an operation screen for classifying a plurality of flux paths inside the nuclear reactor into prescribed groups in an automatic operation mode, a semi-automatic operation mode, or a manual operation mode, outputting operation control signals by the prescribed groups to control the path selector and the drivers and to individually control the voltage of the detector power supply unit so that the flux data can be acquired.

21. The system as set forth in claim 18, wherein the user interface module (231) has an operation screen for classifying a plurality of flux paths inside the nuclear reactor into prescribed groups in an automatic operation mode, a semi-automatic operation mode, or a manual operation mode, and for displaying work status information, an alarm and flux data by the prescribed groups.

22. The system as set forth in claim 1 or 2, wherein the operation means has an interface screen for updating the operating system of the main control means in response to the request of the operator, and transmits the operating system of the main control means updated on the interface screen to the main control means so that the operating system stored in the main control means can be updated.

23. A digital control method for neutron flux mapping systems that enables a plurality of detectors (23) driven by means of a plurality of drivers (22), respectively, to be inserted into a nuclear reactor (40) in regular sequence through detector paths (30) selected by means of a detector path selector (24) so that distribution of neutrons inside the nuclear reactor is measured to verify the current status of the nuclear reactor (40), wherein the digital control method comprises:
an operation control step for outputting an operation control signal using operation information manually set by an operator or prescribed operation information, and collecting and administering flux data transmitted in response to the operation control signal; and
a main control step for
enabling the detectors (23) to be inserted or withdrawn in a prescribed speed and direction through the detector paths (30) in response to the operation control signal at the operation control step,
collecting and storing neutron distribution data inside the nuclear reactor measured by means of the detectors (23), and
transmitting the neutron distribution data to operation means, **characterised in that** the main control step includes
a control processing step for
determining whether a manual mode, a semi-automatic mode, or an automatic mode is selected,
controlling the path selector (20) according to a path control command inputted by the operator and controlling the drivers (22) according to a driver run/stop control command, a driver direction control command, and a driver speed control command inputted by the operator when the manual mode is selected,
controlling the path selector (24) according to a path control command inputted by the operator and controlling the drivers (22) partially automatically according to an insert control command, a scan control command, a record control command, and a withdraw control command inputted by the operator when the semi-automatic mode is selected,
initializing a sequence count to determine whether an external interrupt signal exists when the automatic mode is selected,
finishing the operation when the external interrupt signal exists, automatically generating a path control command according to a prescribed work sequence to control the path selector and automatically generating an insert control command, a scan control command, a record control command, and a withdraw control command according to a prescribed operation sequence to control the drivers when the external interrupt signal does not exist,
finishing the work when the sequence count is larger than a prescribed limit value, and increasing the sequence count so that the operation is repeatedly performed according to a next work sequence when the sequence count is not larger than the prescribed limit value.

24. The method of claim 23, wherein the operation control step is for
outputting prescribed operation information through a data communication network (100), collecting and administering work status information, an alarm, and flux data received through the data communication network (100) in response to the operation control signal, and outputting the collected and administrated operation status information, alarm, and flux data on a screen; the method further comprising
a monitoring step, having the same procedure as the operation control step,
for monitoring the work status through the data communication network (100) at a remote area, the monitoring step being exclusively usable as the operation control step in case of emergency;
a core physics calculation step for analyzing the status of the core of the nuclear reactor using the flux data received through the data communication network (100); and wherein the main control step is for
comparing work status information carried out in response to the operation control signal with an allowable value or a limit value set as the operation information to diagnose the operation status information,
outputting an interlock signal and an alarm signal to protect the instruments when an abnormal condition occurs,
storing the neutron distribution data as flux data, and
transmitting the work status information, the alarm, and the flux data through the data communication network (100).

25. The method as set forth in claim 23 or 24, further comprising: an auxiliary control step for enabling the detectors to be emergently inserted or emergently withdrawn in a prescribed speed and direction through the detector paths in a manual mode when main control means is not available.

26. The method as set forth in claim 23 or 24, further comprising:
a field sound control step for processing the detected signal inputted from a plurality of acoustic sensors, attached to the drivers and the path selector for sensing and outputting the sound signal of the drivers and of the path selector, by means of a field sound control unit so that the sounds are outputted through speaker.

27. The method as set forth in claim 23, wherein the main control step includes a path selector control step for selecting a detector path in response to a path control command inputted manually or automatically from a main control module (520), generating an alarm informing that the detectors are inserted and a path selector stop interlock signal when the current position of the detectors is verified by means of the detector position transmitter and it is determined that the current position of the detectors is above a withdraw limit, receiving the current path of the detectors from the path switches in the path selector, and driving the path selector until the value inputted from the path switches is equal to a manually or automatically set detector path command value.

28. The method as set forth in claim 27, wherein, at the path selector control step, an operation time is counted after the path selector is driven, and a path select time-over alarm and a path selector stop interlock signal are generated so that the path selector is not driven when the counted operation time is above a prescribed allowable value.

29. The method as set forth in claim 23, wherein the main control step includes an insert control step for detecting the current position of the detectors (23) through the use of field sensors (910) and the detector position transmitter (940) while enabling the drivers (22) to run in a forward direction at high speed when an insert command of the detectors is issued manually or automatically from a main control module (520), enabling the insertion operation of the detectors to be continuously carried out when the current position of the detectors is larger than a withdraw limit value and smaller than the lower limit value of the nuclear reactor, and enabling the drivers to be stopped when the current position of the detectors is smaller than the withdraw limit value or larger than the lower limit value of the nuclear reactor.

30. The method as set forth in claim 23, wherein the main control step includes a scan control step for enabling the detectors (23) to scan the inside of the nuclear reactor while enabling the drivers (22) to run in a forward direction at low speed and detects the current Position of the detectors through the use of field sensors (910) and the detector position transmitter (940) when a scan command of the detectors is issued manually or automatically from a main control module (520), enabling the scan operation of the detectors to be continuously carried out when the current position of the detectors is larger than the lower limit value of the nuclear reactor and smaller than the upper limit value of the nuclear reactor, and enabling the drivers to be stopped when the current position of the detectors is smaller than the lower limit value of the nuclear reactor and larger than the upper limit value of the nuclear reactor.

31. The method as set forth in claim 23, wherein the main control step includes a record control step for enabling data acquired by means of the detectors (23) to be received and recorded while enabling the drivers (22) to run in a reverse direction at low speed and detecting the current position of the detectors through the use of field sensors (910) and the detector position transmitter (940) when a record command of the detectors is issued manually or automatically from a main control module (520), enabling the record operation of the detectors to be continuously carried out when the current position of the detectors is larger than the lower limit value of the nuclear reactor and smaller than the upper limit value of the nuclear reactor, and enabling the drivers to be stopped when the current position of the detectors is smaller than the lower limit value of the nuclear reactor and larger than the upper limit value of the nuclear reactor.

32. The method as set forth in claim 23, wherein the main control step includes a withdraw control step for enabling the detectors (23) to be withdrawn while enabling the drivers (22) to run in a reverse direction at high speed and detecting the current, position of the detectors through the use of field sensors (910) and the detector position transmitter (940) when a withdraw command of the detectors is issued manually or automatically from a main control module, enabling the scan operation of the detectors to be continuously carried out when the current position of the detectors is larger than a withdraw limit value and smaller than the lower limit value of the nuclear reactor, and enabling the drivers to be stopped when the current position of the detectors is smaller than the withdraw limit value and larger than the lower limit value of the nuclear reactor.

33. The method as set forth in claim 23, wherein the main control step includes a driver run/stop control step for determining whether the path selector (24) is running or not when a run/stop command of the drivers (22) is issued manually or automatically from a main control module (520), generating an alarm and outputting a driver stop interlock signal when the path selector is running, determining whether a calibration path is set in duplicate or not when the path selector is not running, generating an alarm and a driver stop interlock signal when the calibration path is set in duplicate, turning on a run contact in the case that the command from the main control module is a run command when the calibration path is not set in duplicate, and turning off the run contact in the case that the command from the main control module is a stop command when the calibration path is not set in duplicate.

34. The method as set forth in claim 23, wherein the main control step includes:
a driver direction control step for enabling a forward contact to be turned on so that the drivers (22) can be rotated in a forward direction when a forward rotation command of the drivers is inputted manually or automatically from a main control module (520), and enabling a reverse contact to be turned off so that the drivers can be rotated in a reverse direction when a reverse rotation command of the drivers is inputted manually or automatically from the main control module; and
a driver speed control step for enabling a low-speed contact to be turned on so that the drivers (22) can be rotated at low speed when a low-speed rotation command is inputted manually or
automatically from the main control module (520); and enabling a high-speed contact to be turned on so that the drivers can be rotated at high speed when a high-speed rotation command is inputted manually or automatically from the main control module (520).

35. The method as set forth in claim 23, wherein the main control step includes a flux data acquisition step for initializing a data count corresponding to the total number of the flux data units, acquiring and storing data units one by one, increasing the data count, and enabling a data acquisition routine to be finished when the data count is above a prescribed limit value.

36. The method as set forth in claim 35, wherein the flux data acquisition step is performed so that the data acquisition is carried out by a user or by units of a prescribed data acquisition time.

37. The method as set forth in claim 23, wherein the main control step includes a detector speed diagnosis step for storing a detector position inputted from detector position transmitter (940) by units of a prescribed period, subtracting the previous detector position value from the current detector position value, dividing the subtraction result value by a prescribed time, calculating the divided result speed value of the detectors (23) as an absolute speed value, comparing the absolute speed value with an allowable lower limit value and an allowable upper limit value, and generating an alarm and outputting a driver stop interlock signal when the absolute speed value is smaller than the allowable lower limit value and larger than the allowable upper limit value.

38. The method as set forth in claim 23, wherein the main control step includes a detector no-motion diagnosis step for initializing the time and the number of detector storage reel rotation pulses, counting the detector storage reel rotation pulses for a prescribed period of time, continuously performing a detector no-motion diagnosis routine when the number of the rotation pulses is larger than an allowable value, and generating an alarm and outputting a driver stop interlock signal when the number of the rotation pulses is smaller than an allowable value.

39. The method as set forth in claim 23, wherein the main control step includes a path verification step for calculating a path index corresponding to the current path of the detectors using the path switches in the path selector simultaneously when the path selector is operated, determining whether the combination code of the path switches is equal to a prescribed code value for each path index, and considering that the path selector is electrically or mechanically defective and therefore generating a path mismatch alarm and outputting a path selector stop interlock signal when the combination code of the path switches is not equal to the code value.

40. The method as set forth in claim 23 or 24, wherein the operation control step comprises:
a user interface step for providing a user interface screen so that the operator can input operation information on the user interface screen;
a data transmitting/receiving step for transmitting an operation control signal inputted on the user interface screen to main control means in response to the request of the operation and
receiving work status information, an alarm, and flux data from the main control means in response to the operation control signal; and
a flux data processing step for collecting the flux data to examine reliability of the flux data, correcting and contracting the examined flux data, and generating the corrected and
contracted flux data in the form of a file, a graph, or a numeral so that the flux data is stored, displayed or outputted.

41. The method as set forth in claim 40, wherein the user interface step provides an automatic mode operation screen for automatically selecting detector paths from all flux paths inside the nuclear reactor according to a work sequence prescribed by groups in the automatic operation mode, inserting the detectors into the automatically selected detector paths, scanning and recording the detectors, withdrawing the detectors from the automatically selected detector paths, automatically controlling the voltage of the detectors, and automatically processing the collected flux data.

42. The method as set forth in claim 40, wherein the user interface step provides an operation screen for classifying a plurality of flux paths inside the nuclear reactor into prescribed groups in an automatic operation mode, a semi-automatic operation mode, or a manual operation mode, outputting operation control signals by the prescribed groups to control the path selector and the drivers and to individually control the voltage of the detector power supply unit so that the flux data can be acquired.

43. The method as set forth in claim 40, wherein the user interface step has an operation screen for classifying a plurality of flux paths inside the nuclear reactor into prescribed groups in an automatic operation mode, a semi-automatic operation mode, or a manual operation mode, and for displaying work status information, an alarm and flux data by the prescribed groups.

44. The method as set forth in claim 23 or 24, wherein the operation control step provides an interface screen for updating the operating system of the main control means in response to the request of the operator, and further comprising a transmitting step for transmitting the operating system of main control means updated on the interface screen to the main control means so that the operating system stored in the main control means can be updated.

## Patentansprüche

1. Digitales Steuersystem für Neutronenfluss-Abbildungssysteme, welches es ermöglicht, dass eine Mehrzahl von Detektoren (23), angetrieben mittels einer Mehrzahl von Treibern (22), in einen nuklearen Reaktor in regulärer Sequenz über Detektorwege (30), ausgewählt mittels eines Detektorwegselektors (24), eingesetzt werden, so dass eine Verteilung von Neutronen innerhalb des nuklearen Reaktors zum Verifizieren des momentanen Status des nuklearen Reaktors (40) messbar ist, wobei das digitale Steuersystem aufweist:
eine Betriebseinrichtung (10) zum Ausgeben eines Betriebssteuersignals unter Verwendung von Operationsinformationen, manuell eingestellt durch einen Operator oder von vorgeschriebenen Informationsoperationen, und zum Sammeln und Verwalten von Flussdaten, welche ansprechend auf das Operationssteuersignal übertragbar sind; und
eine Hauptsteuereinrichtung (21) zum
Ermöglichen, dass die Detektoren (23) mit vorgeschriebener Geschwindigkeit und Richtung durch die Detektorwege (30) ansprechend auf das Operationssteuersignal der Operationseinrichtung (10) eingesetzt oder zurückgezogen werden;
zum Sammeln und Speichern der Neutronenverteilungsdaten innerhalb des nuklearen Reaktors, gemessen mittels der Detektoren (23), und
zum Übertragen der Neutronenverteilungsdaten an die Betriebseinrichtung (10), **dadurch gekennzeichnet, dass** die Hauptsteuereinrichtung (21)
ein Hauptsteuermodul (520) aufweist zum
Bestimmen, ob ein manueller Modus, ein halbautomatischer Modus oder ein automatischer Modus ausgewählt ist zum Steuern des Wegselektors 824) gemäß einem Wegsteuerbefehl, der durch den Operator angegeben ist, und
zum Steuern der Treiber (22) gemäß einem Treiber-Lauf/Stopp-Steuerbefehl, einem Treiberrichtungs-Steuerbefehl und einem Treibergeschwindigkeits-Steuerbefehl, welcher durch den Operator angegeben wird, wenn der manuelle Modus ausgewählt ist,
Steuern des Wegselektors (24) gemäß einem Wegsteuerbefehl,
der durch den Operator angegeben ist, und Steuern der Treiber (22) teilweise automatisch gemäß einem Einsetzsteuerbefehl, einem Scan-Steuerbefehl, einem Aufnahmesteuerbefehl und einem Rückzugssteuerbefehl, welche durch den Operator eingegeben sind, wenn der halbautomatische Modus ausgewählt ist,
Initialisieren einer Sequenzzählung zum Bestimmen, ob ein externes Interrupt-Signal existiert, wenn der automatische Modus ausgewählt ist,
zum Beenden des Betriebs, wenn das externe Interrupt-Signal existiert, zum automatischen Erzeugen eines Wegsteuerbefehls gemäß einer vorgeschriebenen Arbeitssequenz zum Steuern des Wegselektors (24) und automatischen Erzeugen eines Einsatzsteuerbefehls, eines Scan-Steuerbefehls, eines Aufnahmesteuerbefehls und eines Rückzugssteuerbefehls gemäß einer vorgeschriebenen Betriebssequenz zum Steuern der Treiber (22), wenn das externe Interrupt-Signal nicht existiert,
zum Beenden der Arbeit, wenn die Sequenzzählung größer als ein vorbestimmter Grenzwert ist, und
zum Erhöhen der Sequenzzählung, so dass die Operation gemäß einer nächsten Arbeitssequenz wiederholt durchgeführt wird, wenn die Sequenzzählung nicht größer als der vorgeschriebene Grenzwert ist.

2. Digitales Steuersystem nach Anspruch 1, wobei das digitale Steuersystem weiterhin aufweist:
ein Datenkommunikationsnetzwerk (100);
eine Betriebseinrichtung (200) zum
Sammeln und Verarbeiten von Arbeitsstatusinformationen,
eines Alarms und Flussdaten, welche durch das Datenkommunikationsnetzwerk (100) ansprechend auf das Operationssteuersignal erhalten werden, und zum
Ausgeben der gesammelten und verwalteten Operationsstatusinformationen, Alarm und Flussdaten auf einem Schirm;
eine Überwachungseinrichtung (300) mit demselben Aufbau wie der Betriebseinrichtung (200) zum Überwachen des Arbeitsstatus über das Datenkommunikationsnetzwerk an einem entfernten Bereich,
wobei die Überwachungseinrichtung (300) ausschließlich als Betriebseinrichtung im Notfall verwendbar ist;
einer Kernphysik-Berechnungseinrichtung (400) zum Analysieren des Kerns des nuklearen Reaktors unter Verwendung der über das Datenkommunikationsnetzwerk (100) empfangenen Flussdaten; und
eine Hauptsteuereinrichtung (500)
zum Vergleichen der Arbeitsstatusinformationen, ausgeführt ansprechend auf das Betriebssteuersignal mit einem erlaubbaren Wert oder einem Grenzwert, eingestellt als die Operationsinformationen zum Diagnostizieren der Betriebsstatusinformationen,
zum Ausgeben eines Verriegelungssignals und eines Alarmsignals zum Schützen der Instrumente, wenn eine abnormale Bedingung auftritt,
zum Speichern der Neutronenverteilungsdaten als Flussdaten,
wobei die vorgeschriebenen Betriebsinformationen durch das Datenkommunikationsnetzwerk (100) ausgegeben werden;
zum Übertragen der Arbeitsstatusinformationen, des Alarms und der Flussdaten durch das Datenkommunikationsnetzwerk (100).

3. System nach Anspruch 1 oder 2, weiterhin aufweisend:
eine Hilfseinrichtung (600) zum Ermöglichen, dass die Detektoren notfalls eingesetzt oder notfalls zurückgezogen werden mit vorbestimmter Geschwindigkeit und Richtung durch die Detektorwege in einem manuellen Modus, wenn die Hauptsteuereinrichtung nicht verfügbar ist.

4. System nach Anspruch 1 oder 2, weiterhin aufweisend:
eine Mehrzahl von akustischen Sensoren (710), welche an die Treiber und den Wegselektor zum Erfassen und Ausgeben des Schallsignals der Treiber und des Wegselektors angebracht sind; und
eine Feldschallsteuereinrichtung (700) zum Verarbeiten des erfassten Signals, welches von den akustischen Sensoren eingegeben wird, so dass die Schallmuster durch einen Lautsprecher ausgegeben werden.

5. System nach Anspruch 1, wobei die Hauptsteuereinrichtung ein Wegselektor-Steuermodul (525) aufweist zum Auswählen eines Selektorweges ansprechend auf einen manuell oder automatisch von dem Hauptsteuermodul (520) eingegebenen Wegsteuerbefehl, zum Erzeugen einer Alarminformation, dass die Detektoren eingesetzt sind, und eines Wegselektorstopp-Verriegelungssignals, wenn die momentane Position der Detektoren mittels des Detektorpositionsübertragers verifiziert wird, und bestimmt wird, dass die momentane Position der Detektoren oberhalb eines Rückzugsgrenzwerts ist, Empfangen der momentanen Wegdetektoren von den Wegschaltern in dem Wegselektor und Antreiben des Wegselektors, bis der von den Wegschaltern eingegebene Wert gleich einem manuell oder automatisch eingegebenen Wegbefehlswert ist.

6. System nach Anspruch 5, wobei das Wegselektor-Steuermodul (525) eine Betriebszeit zählt, nachdem der Wegselektor angetrieben ist, und ein Wegselektor-Zeit-vorbei-Alarm und ein Wegselektorstopp-Verriegelungssignal erzeugt, so dass der Wegselektor (24) nicht angetrieben wird, wenn die gezählte Betriebszeit oberhalb eines vorgeschriebenen erlaubbaren Wertes liegt.

7. System nach Anspruch 1, wobei die Hauptsteuereinrichtung ein Einsetzsteuermodul (530) zum Erfassen der momentanen Position der Detektoren (23) unter Verwendung von Feldsensoren (910) und dem Detektorpositionsübertrager (910) umfasst, bei gleichzeitigem Ermöglichen, dass die Treiber (22) in einer Vorwärtsrichtung mit hoher Geschwindigkeit laufen, wenn ein Einsetzbefehl der Detektoren (23) manuell oder automatisch von dem Hauptsteuermodul (520) in Wert gestellt wird, zum Ermöglichen, dass das Einsetzen der Detektoren kontinuierlich ausgeführt wird, wenn die momentane Position der Detektoren (23) größer als ein Rückzugsgrenzwert und kleiner als der untere Grenzwert des nuklearen Reaktors ist, und zum Ermöglichen, dass die Treiber (22) gestoppt werden, wenn die momentane Position der Detektoren (23) kleiner als der Rückzugsgrenzwert oder größer als der untere Grenzwert des nuklearen Reaktors ist.

8. System nach Anspruch 1, wobei das Hauptsteuersystem ein Scan-Steuermodul (535) aufweist zum Ermöglichen, dass die Detektoren (23) die Innenseite des nuklearen Reaktors scannen, während es ermöglicht ist, dass die Treiber (22) mit geringer Geschwindigkeit in eine Vorwärtsrichtung laufen, und die momentane Position der Detektoren unter Verwendung von Feldsensoren (910) und einem Detektorpositionsübertrager (940) erfasst, wenn ein Scan-Befehl der Detektoren manuell oder automatisch von dem Hauptsteuermodul (520) in Wert gestellt wird, zum Ermöglichen, dass der Scan-Betrieb der Detektoren kontinuierlich ausgeführt wird, wenn die momentane Position der Detektoren größer als der untere Grenzwert des nuklearen Reaktors und kleiner als der obere Grenzwert des nuklearen Reaktors ist, und zum Ermöglichen, dass die Treiber gestoppt werden, wenn die momentane Position der Detektoren kleiner als der untere Grenzwert des nuklearen Reaktors und größer als der obere Grenzwert des nuklearen Reaktors ist.

9. System nach Anspruch 1, wobei die Hauptsteuereinrichtung ein Aufnahmesteuermodul (540) aufweist zum Ermöglichen, dass die mittels der Detektoren (23) akquirierten Daten empfangen und aufgenommen werden, während ermöglicht ist, dass die Treiber (22) in einer Rückwärtsrichtung bei niedriger Geschwindigkeit laufen, und zum Erfassen der momentanen Position der Detektoren über die Verwendung von Feldsensoren (910) und des Detektorpositionsübertragers (940), wenn ein Aufnahmebefehl der Detektoren manuell oder automatisch von dem Hauptsteuermodul (520) in Wert gestellt wird; zum Ermöglichen, dass die Aufnahmeoperation der Detektoren kontinuierlich ausgeführt wird, wenn die momentane Position der Detektoren größer als der untere Grenzwert des nuklearen Reaktors und kleiner als der obere Grenzwert des nuklearen Reaktors ist, und zum Ermöglichen, dass die Treiber gestoppt werden, wenn die momentane Position der Detektoren kleiner als der unteren Grenzwert des nuklearen Reaktors und größer als der obere Grenzwert des nuklearen Reaktors ist.

10. System nach Anspruch 1, wobei die Hauptsteuereinrichtung ein Rückzugssteuermodul (545) aufweist zum Ermöglichen, dass die Detektoren (23) zurückgezogen werden, während ermöglicht ist, dass die Treiber (22) in einer Rückwärtsrichtung mit hoher Geschwindigkeit laufen, und zum Erfassen der momentanen Position der Detektoren, die unter der Verwendung der Feldsensoren (910) und des Detektorpositionsübertragers (940), wenn ein Rückzugsbefehl der Detektoren manuell oder automatisch von dem Hauptsteuermodul (529) in Wert gestellt wird, zum Ermöglichen, dass der Scan-Betrieb der Detektoren kontinuierlich ausgeführt wird, wenn die momentane Position der Detektoren größer als ein Rückzugsgrenzwert oder kleiner als der untere Grenzwert des nuklearen Reaktors ist, und zum Ermöglichen, dass die Treiber gestoppt werden, wenn die momentane Position der Detektoren kleiner als der Rückzugsgrenzwert und größer als der Untergrenzwert des nuklearen Reaktors ist.

11. System nach Anspruch 1, wobei die Hauptsteuereinrichtung ein Treiber-Lauf/Stopp-Steuermodul (550) aufweist zum Bestimmen, ob der Wegselektor (24) läuft oder nicht, wenn ein Lauf/Stopp-Befehl der Treiber (22) manuell oder automatisch von dem Hauptsteuermodul (320) in Wert gestellt wird, zum Erzeugen eines Alarms und Ausgeben eines Treiberstopp-Verriegelungssignals, wenn der Wegselektor läuft, Bestimmen, ob ein Kalibrierungsweg doppelt eingestellt ist oder nicht, wenn der Wegselektor nicht läuft, zum Erzeugen eines Alarms und eines Treiberstopp-Verriegelungssignals, wenn der Kalibrierungsweg doppelt eingestellt ist, zum Einschalten eines Laufkontakts im Fall, dass der Befehl von dem Hauptsteuermodul ein Laufbefehl ist, wenn der Kalibrierungsweg nicht doppelt eingestellt ist, und zum Ausstellen des Laufkontakts in dem Fall, dass der Befehl von dem Hauptsteuerbefehl ein Stoppbefehl ist, wenn der Kalibrierungsweg nicht doppelt eingestellt ist.

12. System nach Anspruch 1, wobei die Hauptsteuereinrichtung aufweist:
ein Treiberrichtungs-Steuermodul (555) zum Ermöglichen,
dass ein Vorwärtskontakt eingeschaltet wird, so dass die Treiber (22) in eine Vorwärtsrichtung rotiert werden können, wenn ein Vorwärtsrotationsbefehl der Treiber manuell oder automatisch von dem Hauptsteuermodul (520) eingegeben wird, und zum Ermöglichen, dass ein Rückwärtskontakt ausgeschaltet wird, so dass die Treiber (22) in eine Rückwärtsrichtung rotiert werden können, wenn ein Rückwärtsdrehungsbefehl der Treiber manuell oder automatisch von dem Hauptsteuermodul (520) in Wert gestellt wird; und
ein Treibergeschwindigkeits-Steuermodul (650) zum Ermöglichen, dass ein Niedriggeschwindigkeitskontakt eingeschaltet wird, so dass die Treiber (22) mit niedriger Geschwindigkeit rotiert werden können, wenn ein Niedriggeschwindigkeits-Rotationsbefehl manuell oder automatisch von dem Hauptsteuermodul (520) in Wert gestellt wird, und zum Ermöglichen, dass ein Hochgeschwindigkeitskontakt angeschaltet wird, so dass die Treiber mit hoher Geschwindigkeit rotiert werden können, wenn ein Hochgeschwindigkeitsrotationsbefehl manuell oder automatisch von dem Hauptsteuermodul in Wert gestellt wird.

13. System nach Anspruch 1, wobei die Hauptsteuereinrichtung ein Flussdaten-Akquisitionsmodul (565) aufweist zum Initialisieren eines Datenzählwerts entsprechend der Gesamtanzahl der Flussdateneinheiten, Akquirieren und Speichern von Dateneinheiten eine nach der anderen, Erhöhen des Datenzählwerts und Ermöglichen, dass eine Datenakquisitionsroutine beendet wird, wenn der Datenzählwert oberhalb eines vorbestimmten Grenzwerts liegt.

14. System nach Anspruch 13, wobei das Flussdaten-Akquisitionsmodul (565) derart betreibbar ist, dass die Datenakquisition durch einen Benutzer oder durch Einheiten einer vorbestimmten Datenakquisitionszeit ausgeführt wird.

15. System nach Anspruch 1, wobei die Hauptsteuereinrichtung ein Detektorgeschwindigkeits-Diagnosemodul (570) zum Speichern einer von dem Detektorpositionsübertrager (940) eingegebenen Detektorposition durch Einheiten einer vorbestimmten Periode, Subtrahieren des vorherigen Detektorpositionswert von dem momentanen Detektionspositionswert, Teilen des Subtraktionsresultatwerts durch eine vorbestimmte Zeit, Berechnen des geteilten Resultatsgeschwindigkeitswerts des Detektors (23) als ein absoluter Geschwindigkeitswert, Vergleichen der absoluten Geschwindigkeit mit einem erlaubbaren unteren Grenzwert und einem erlaubbaren oberen Grenzwert und Erzeugen eines Alarms und Ausgeben eines Treiberstopp-Verriegelungssignals, wenn der absolute Geschwindigkeitswert geringer als der erlaubbare untere Geschwindigkeitswert und größer als der erlaubbare obere Geschwindigkeitswert ist, aufweist.

16. System nach Anspruch 1, wobei die Hauptsteuereinrichtung ein Detektor-Nichtbewegungs-Diagnosemodul (575) zum Initialisieren der Zeit und der Anzahl von Detektorspeicher-Drahtdrehpulsen, Zählen der Dektetorspeicherrad-Drehpulse während einer vorbestimmen Zeitspanne, kontinuierlichen Durchführen einer Detektor-Nichtbewegungs-Diagnoseroutine, wenn die Anzahl der Rotationspulse größer als ein erlaubbarer Wert ist, und zum Erzeugen eines Alarms und Ausgeben eines Treiberstopp-Verriegelungssignals, wenn die Anzahl der Rotationspulse kleiner als ein erlaubbarer Wert ist, aufweist.

17. System nach Anspruch 1, wobei die Hauptsteuereinrichtung einen Weg-Verifizierungsmodul (580) zum Berechnen eines Wegindex entsprechend dem momentanen Weg der Detektoren unter Verwendung der Wegschalter in dem Wegselektor simultan, wenn der Wegselektor betrieben wird, zum Bestimmen, ob der Kombinationscode der Wegschalter gleich einem vorbestimmten Codewert für jeden Wegindex ist, und zum Ermitteln, dass der Wegselektor elektrisch und mechanisch defekt ist und deshalb zum Erzeugen eines Weg-Fehlanpassungsalarms und Ausgeben eines Weg-Selektorstopp-Verriegelungssignals, wenn der Kombinationscode der Wegschalter nicht gleich dem Codewert ist, aufweist.

18. System nach Anspruch 1 oder 2, wobei die Betriebseinrichtung aufweist:
ein Benutzer-Interface-Modul (231) mit einem Benutzer-Interface-Schirm zum Ermöglichen, dass der Operator Operationsinformationen darauf eingibt;
ein Daten-Transceiver-Modul (232) zum Übertragen eines Betriebssteuersignals, das auf dem Benutzer-Interface-Schirm an die Hauptsteuereinrichtung ansprechend auf eine Betriebsanforderung eingegeben wird, und zum Empfangen von Arbeitsstatus-Informationen, eines Alarms und Flussdaten von der Hauptsteuereinrichtung ansprechend auf das Betriebssteuersignal; und
ein Flussdaten-Verarbeitungsmodul (233) zum Sammeln der Flussdaten zum Untersuchen der Zuverlässigkeit der Flussdaten, zum Korrigieren und Zusammenziehen der geprüften Flussdaten und zum Erzeugen der korrigierten und zusammengezogenen Flussdaten in Form einer Datei, einer graphischen Darstellung oder einer Zahl, so dass die Flussdaten gespeichert, angezeigt oder ausgegeben werden.

19. System nach Anspruch 18, wobei das Benutzer-Interface-Modul (231) einen Automatikmodus-Betriebsschirm aufweist zum automatischen Wählen von Detektorwegen von allen Flusswegen innerhalb des nuklearen Reaktors gemäß einer Arbeitssequenz, welche durch Gruppen in dem automatischen Betriebsmodus vorgeschrieben ist, zum Einsetzen der Detektoren in die automatisch ausgewählten Detektorwege, Scannen und Aufnehmen der Detektoren, Zurückziehen der Detektoren von den automatisch ausgewählten Detektorwegen, automatischen Steuern der Spannung der Detektoren und automatischen Prozessieren der gesammelten Flussdaten.

20. System nach Anspruch 18, wobei das Benutzer-Interface-Modul (231) einen Betriebsschirm zum Klassifizieren einer Vielzahl von Flusswegen innerhalb des nuklearen Reaktors in vorgeschriebene Gruppen in einem automatischen Betriebsmodus, in einem halbautomatischen Betriebsmodus oder einem manuellen Betriebsmodus, zum Ausgeben von Betriebssteuersignalen durch die vorgeschriebenen Gruppen zum Steuern des Wegselektors und der Treiber und zum individuellen Steuern der Spannung der Detektorspannungsversorgungseinheit, so dass die Flussdaten akquiriert werden können, aufweist.

21. System nach Anspruch 18, wobei das Benutzer-Interface-Modul (231) einen Betriebsschirm zum Klassifizieren einer Mehrzahl von Flusswegen innerhalb des nuklearen Reaktors in vorbeschriebene Gruppen in einem automatischen Betriebsmodus, einem halbautomatischen Betriebsmodus oder einem manuellen Betriebsmodus und zum Anzeigen von Arbeitsstatusinformationen, eines Alarms und Flussdaten durch die vorgeschriebenen Gruppen aufweist.

22. System nach Anspruch 1 oder 2, wobei die Betriebseinrichtung einen Interface-Schirm zum Auffrischen des Betriebssystems der Hauptsteuereinrichtung ansprechend auf die Anforderung eines Operators aufweist und das Betriebssystem der Hauptsteuereinrichtung, aufgefrischt auf dem Interface-Schirm, an die Hauptsteuereinrichtung überträgt, so dass das in der Hauptsteuereinrichtung gespeicherte Betriebssystem aufgefrischt werden kann.

23. Digitales Steuerverfahren für Neutronenfluss-Abbildungssysteme, welches ermöglicht, dass eine Vielzahl von Detektoren (23) angetrieben durch eine Vielzahl von Treibern (22) in einen nuklearen Reaktor (40) in regulärer Sequenz über Detektorwege (30) eingesetzt wird, welche mittels eines Detektorwegselektors (24) auswählbar sind, so dass die Verteilung von Neutronen innerhalb des nuklearen Reaktors gemessen wird zum Verifizieren des momentanen Status des nuklearen Reaktors (40), wobei das digitale Steuerverfahren folgende Schritte aufweist:
einen Betriebssteuerschritt zum Ausgeben eines Betriebssteuersignals unter Verwendung von Betriebsinformationen,
welche manuell durch einen Operator oder eine vorgeschriebene Betriebsinformation eingestellt werden, und zum Sammeln und Verwalten von Flussdaten, welche ansprechend auf das Betriebssteuersignal übertragen werden; und
einen Hauptsteuerschritt zum
Ermöglichen, dass die Detektoren (23) in vorgeschriebener Geschwindigkeit und Richtung durch die Detektorwege (30) ansprechend auf das Betriebssteuersignal, das in dem Betriebssteuerschritt eingesetzt wird, zurückgezogen werden,
Sammeln und Steuern von Neutronenverteilungsdaten innerhalb des nuklearen Reaktors, gemessen mittels der Detektoren (23), und
Übertragen der Neutronenverteilungsdaten an die Betriebseinrichtung, **dadurch gekennzeichnet, dass** der Hauptsteuerschritt umfasst:
einen Steuerverarbeitungsschritt zum
Bestimmen, ob ein manueller Modus, ein halbautomatischer Modus oder ein automatischer Modus ausgewählt ist,
Steuern des Wegselektors (24) gemäß einem Wegsteuerbefehl,
eingegeben durch den Operator, und Steuern der Treiber (22) entsprechend einem Treiber-Lauf/Stopp-Steuerbefehl, einem Treiberrichtungssteuerbefehl, einem Treibergeschwindigkeits-Steuerbefehl, eingegeben durch den Operator, wenn der manuelle Modus ausgewählt ist,
Steuern des Wegselektors (24) gemäß einem Wegsteuerbefehl,
eingegeben durch den Operator, und Steuern der Treiber (22) teilautomatisch gemäß einem Einsatzsteuerbefehl, einem Scan-Steuerbefehl, einem Aufnahmesteuerbefehl und einem Rückzugssteuerbefehl, eingegeben durch den Operator,
wenn der halbautomatische Modus ausgewählt ist,
Initialisieren eines Sequenzzielwerts zum Bestimmen, ob ein externes Interrupt-Signal existiert, wenn der automatische Modus ausgewählt ist,
Beenden des Betriebs, wenn das externe Interrupt-Signal existiert, automatisches Erzeugen eines Wegsteuerbefehls gemäß einer vorbeschriebenen Arbeitssequenz zum Steuern des Wegselektors und automatischen Generieren eines Einsatzsteuerbefehls, eines Scan-Steuerbefehls, eines Aufnahmesteuerbefehls und eines Rückzugssteuerbefehls gemäß einer vorgeschriebenen Betriebssequenz zum Steuern der Treiber, wenn das externe Interrupt-Signal nicht existiert,
Beenden der Arbeit, wenn der Sequenzzählwert größer als ein vorbestimmter Grenzwert ist, und
Erhöhen des Sequenzzählwerts, so dass der Betrieb wiederholt durchgeführt wird, gemäß einer nächsten Arbeitssequenz, wenn der Sequenzzählwert nicht größer als der vorbeschriebene Grenzwert ist.

24. Verfahren nach Anspruch 23, wobei der Betriebssteuerschritt zum Ausgeben vorbestimmter Betriebsinformationen über ein Datenkommunikationsnetzwerk (100), Sammeln und Verwalten der Arbeitsstatusinformationen, eines Alarms und Flussdaten, Empfangen durch das Datenkommunikationsnetzwerk (100) ansprechend auf das Betriebssteuersignal und zum Ausgeben der gesammelten und verwalteten Betriebsstatusinformationen, des Alarms und der Flussdaten auf einem Schirm vorgesehen ist, wobei das Verfahren weiterhin aufweist:
einen Überwachungsschritt mit derselben Prozedur wie dem Operationssteuerschritt
zum Überwachen des Arbeitsstatus über das Datenkommunikationsnetzwerk (100) an einem entfernten Bereich, wobei der Überwachungsschritt ausschließlich als der Operationssteuerschritt im Fall von Gefahr verwendbar ist;
einen Kernphysik-Berechnungsschritt zum Signalisieren des Status des Kerns des nuklearen Reaktors unter Verwendung der durch das Kommunikationsnetzwerk (100) empfangenen Flussdaten; und wobei der Hauptsteuerschritt zum Vergleichen der Arbeitsstatusinformationen, ausgeführt ansprechend auf das Betriebssteuersignal mit einem erlaubbaren Wert oder Grenzwert, eingestellt als die Betriebsinformationen zum Diagnostizieren der Betriebsstatusinformation,
Ausgeben eines Verriegelungssignals und eines Alarmsignals zum Schützen der Instrumente, wenn eine abnormale Bedingung auftritt,
Speichern der Neutronenverteilungsdaten als Flussdaten, und
Übertragen der Arbeitsstatusinformation, des Alarms und der Flussdaten durch das Datenkommunikationsnetzwerk (100) eingerichtet ist.

25. Verfahren nach Anspruch 23 oder 24, weiterhin aufweisend:
einen Hilfssteuerschritt zum Ermöglichen, dass die Detektoren notfalls eingesetzt oder notfalls zurückgezogen werden in einer vorbestimmten Geschwindigkeit und Richtung durch die Detektorwege in einem manuellen Modus, wenn die Hauptsteuereinrichtung nicht verfügbar ist.

26. Verfahren nach Anspruch 23 oder 24, weiterhin aufweisend:
einen Feldschallsteuerschritt zum Verarbeiten des erfassten Signals, eingegeben von einer Vielzahl von akustischen Sensoren, welche an den Treibern und dem Wegselektor angebracht sind, zum Erfassen und Ausgeben des Steuersignals der Treiber und des Wegselektors, mittels einer Feldschallsteuereinheit, so dass die Schallmuster durch einen Lautsprecher ausgegeben werden.

27. Verfahren nach Anspruch 23, wobei der Hauptsteuerschritt einen Wegselektor-Steuerschritt zum Auswählen eines Detektorweges ansprechend auf einen Wegsteuerbefehl aufweist, welcher manuell oder automatisch von einem Hauptsteuermodul (520) eingegeben wird, zum Erzeugen eines Alarms zum Informieren, dass die Detektoren eingesetzt sind, und eines Wegselektorstopp-Verriegelungssignals, wenn die momentane Position der Detektoren mittels des Detektorpositions-Transmitters verifiziert wird und bestimmt wird, dass die momentane Position der Detektoren oberhalb einem Rückzugsgrenzwert ist, zum Empfangen des momentanen Wegs der Detektoren von den Wegschaltern in dem Wegselektor und zum Antrieben des Wegselektors, bis der von den Wegschaltern eingegebene Wert gleich ist einem manuell oder automatisch eingestellten Detektorweg-Befehlswert.

28. Verfahren nach Anspruch 27, wobei beim Wegselektor-Steuerschritt eine Betriebszeit gezählt wird, nachdem der Wegselektor angetrieben wird, und ein Wegauswahl-Überzeitalarm und ein Wegselektorstopp-Verriegelungssignal erzeugt werden, so dass der Wegselektor nicht angetrieben wird, wenn die gezählte Betriebszeit oberhalb eines vorgeschriebenen erlaubbaren Werts liegt.

29. Verfahren nach Anspruch 23, wobei der Hauptsteuerschritt einen Einsatzsteuerschritt aufweist zum Erfassen der momentanen Position der Detektoren (23) unter Benutzung von Feldsensoren (910) und des Detektorpositionsübertragers (940), wobei ermöglicht wird, dass die Treiber (22) mit hoher Geschwindigkeit in einer Vorwärtsrichtung laufen, wenn ein Einsatzbefehl der Detektoren manuell oder automatisch von einem Hauptsteuermodul (520) in Wert gestellt wird, wobei ermöglicht wird, dass der Einsatzbetrieb der Detektoren kontinuierlich ausgeführt wird, wenn die momentane Position der Detektoren größer als ein Rückzugsgrenzwert und kleiner als der untere Grenzwert des nuklearen Reaktors ist, und wobei ermöglicht wird, dass die Treiber gestoppt werden, wenn die momentane Position der Detektoren kleiner als der Rückzugsgrenzwert oder größer als der untere Grenzwert des Nuklearreaktors ist.

30. Verfahren nach Anspruch 23, wobei der Hauptsteuerschritt einen Scan-Steuerschritt erfasst zum Ermöglichen, dass die Detektoren (23) die Innenseite des nuklearen Reaktors scannen, wobei ermöglicht ist, dass die Treiber (22) in einer Vorwärtsrichtung mit niedriger Geschwindigkeit laufen und wobei die momentane Position der Detektoren über die Verwendung der Feldsensoren (910) und des Detektorpositions-Transmitters (940) erfasst wird, wenn ein Scan-Befehl der Detektoren manuell oder automatisch von einem Hauptsteuermodul (520) in Wert gestellt wird, wobei ermöglicht wird, dass der Scan-Betrieb der Detektoren kontinuierlich ausgeführt wird, wenn die momentane Position der Detektoren größer als der untere Grenzwert des nuklearen Reaktors ist und kleiner als der obere Grenzwert des nuklearen Reaktors ist, und wobei ermöglicht wird, dass die Treiber gestoppt werden, wenn die momentane Position der Detektoren kleiner als der untere Grenzwert des nuklearen Reaktors und größer als der obere Grenzwert des nuklearen Reaktors ist.

31. Verfahren nach Anspruch 23, wobei der Hauptsteuerschritt einen Aufnahmesteuerschritt aufweist zum Ermöglichen, dass die mittels der Detektoren (23) akquirierten Daten empfangen und aufgenommen werden, wobei ermöglicht ist, dass die Treiber (22) in einer Rückwärtsrichtung mit niedriger Geschwindigkeit laufen und wobei die momentane Position der Detektoren unter Verwendung von Feldsensoren (910) und dem Detektorpositions-Transmitter (940) erfasst wird, wenn ein Aufnahmebefehl der Detektoren manuell oder automatisch von einem Hauptsteuermodul (520) in Wert gestellt wird, wobei ermöglicht wird, dass der Aufnahmebetrieb der Detektoren kontinuierlich ausgeführt wird, wenn die momentane Position der Detektoren größer als der untere Grenzwert des nuklearen Reaktors und kleiner als der obere Grenzwert des nuklearen Reaktors ist, und wobei ermöglicht wird, dass die Treiber gestoppt werden, wenn die momentane Position der Detektoren kleiner als der Rückzugsgrenzwert des nuklearen Reaktors und größer als der obere Grenzwert des nuklearen Reaktors ist.

32. Verfahren nach Anspruch 23, wobei der Hauptsteuerschritt einen Rückzugssteuerschritt aufweist zum Ermöglichen, dass die Detektoren (23) zurückgezogen werden, wobei ermöglicht wird, dass die Treiber (22) in einer Rückwärtsrichtung mit hoher Geschwindigkeit laufen und wobei die momentane Position der Detektoren unter der Verwendung von Feldsensoren (910) und dem Detektorpositionsübertrager (940) erfasst wird, wenn ein Rückzugsbefehl der Detektoren manuell oder automatisch von einem Hauptsteuermodul in Wert gestellt wird, wobei ermöglicht wird, dass der Scan-Betrieb der Detektoren kontinuierlich ausgeführt wird, wenn die momentane Position der Detektoren größer als ein Rückzugsgrenzwert und kleiner als der untere Grenzwert des nuklearen Reaktors ist, und wobei ermöglicht wird, dass die Treiber gestoppt werden, wenn die momentane Position der Detektoren kleiner als der Rückzugsgrenzwert und größer als der untere Grenzwert des nuklearen Reaktors ist.

33. Verfahren nach Anspruch 23, wobei der Hauptsteuerschritt einen Treiber-Lauf/Stopp-Steuerschritt aufweist zum Bestimmen, ob der Wegselektor (24) läuft oder nicht, wenn ein Lauf/Stopp-Befehl der Treiber (22) manuell oder automatisch von einem Hauptsteuermodul (520) in Wert gestellt wird, zum Erzeugen eines Alarms und Ausgeben eines Treiber-Stopp-Verriegelungssignals, wenn der Wegselektor läuft, Bestimmen, ob ein Kalibrierungsweg doppelt eingestellt ist oder nicht, wenn der Wegselektor nicht läuft, Erzeugen eines Alarms und eines Treiberstopp-Verriegelungssignals, wenn der Kalibrierungsweg doppelt eingestellt ist, Einschalten eines Laufkontakts in dem fall, dass der befehl von dem Hauptsteuermodul ein Laufbefehl ist, wenn der Kalibrierungsweg nicht doppelt eingestellt ist, und Ausschalten des Laufkontakts in dem Fall, dass der Befehl von dem Hauptsteuermodul ein Stoppbefehl ist, wenn der Kalibrierungsweg nicht doppelt eingestellt ist.

34. Verfahren nach Anspruch 24, wobei der Hauptsteuerschritt aufweist:
einen Treiberrichtungs-Steuerschritt zum Ermöglichen, dass ein Vorwärtskontakt eingeschaltet wird, so dass die Treiber (22) in einer Vorwärtsrichtung rotiert werden können,
wenn ein Vorwärtsdrehbefehl der Treiber manuell oder automatisch von einem Hauptsteuermodul (520) eingegeben wird,
und zum Ermöglichen, dass ein Rückwärtskontakt ausgeschaltet wird, so dass die Treiber in einer Rückwärtsrichtung gedreht werden können, wenn ein Rückwärtsdrehbefehl der Treiber manuell oder automatisch von dem Hauptsteuermodul eingegeben wird; und
einem Treibergeschwindigkeits-Steuerschritt zum Ermöglichen, dass ein Niedriggeschwindigkeitskontakt eingeschaltet wird, so dass die Treiber (22) mit niedriger Geschwindigkeit gedreht werden können, wenn ein Niedriggeschwindigkeits-Drehbefehl manuell oder automatisch von dem Hauptsteuermodul (520) eingegeben wird, und zum Ermöglichen, dass ein Hochgeschwindigkeitskontakt eingeschaltet wird, so dass die Treiber mit großer Geschwindigkeit rotiert werden können, wenn ein Hochgeschwindigkeits-Rotationsbefehl manuell oder automatisch von dem Hauptsteuermodul (520) eingegeben wird.

35. Verfahren nach Anspruch 23, wobei der Hauptsteuerschritt einen Flussdaten-Akquisitionsschritt aufweist zum Initialisieren eines Datenzählwerts entsprechend der Gesamtanzahl der Flussdateneinheiten, Akquirieren und Speichern von Dateneinheiten einer nach dem anderen, Erhöhen des Datenzählwerts und Ermöglichen, dass eine Datenakquisitionsroutine beendet wird, wenn der Datenzählwert oberhalb eines vorbestimmten Grenzwerts ist.

36. Verfahren nach Anspruch 35, wobei der Flussdaten-Akquisitionsschritt derart durchgeführt wird, dass die Datenakquisition ausgeführt wird von einem Benutzer oder von Einheiten einer vorbeschriebenen Datenakquisuitionszeit.

37. Verfahren nach Anspruch 23, wobei der Hauptsteuerschritt einen Detektorgeschwindigkeits-Diagnoseschritt aufweist zum Speichern einer Detektorposition, welche von dem Detektorpositions-Transmitter (940) eingegeben wird, durch Einheiten einer vorbeschriebenen Periode, Subtrahieren des vorherigen Detektorpositionswerts von dem momentanen Detektorpositionswert, Dividieren des Subtraktionsresultatwerts durch eine vorbestimmte Zeit, Berechnen des Divisionsresultats-Geschwindigkeitswerts der Detektoren (23) als absoluter Geschwindigkeitswert, Vergleichen des absoluten Geschwindigkeitswerts mit einem erlaubbaren unteren Grenzwert und einem erlaubbaren oberen Grenzwert und Erzeugen eines Alarms und Ausgeben eines Treiberstopp-Verriegelungswerts, wenn der absolute Geschwindigkeitswert kleiner als der erlaubbare untere Grenzwert und größer als der erlaubbare untere Grenzwert ist.

38. Verfahren nach Anspruch 23, wobei der Hauptsteuerschritt einen Detektor-Nichtbewegungs-Diagnoseschritt zum Initialisieren der Zeit und der Anzahl von Detektorspeicherrad-Drehimpulsen, zum Zählen der Detektorspeicherrad-Drehimpulse während einer vorbeschriebenen Zeitspanne, zum kontinuierlichen Durchführen einer Detektor-Nichtbewegungs-Diagnoseroutine aufweist, wenn die Anzahl der Rotationspulse größer als ein erlaubbarer Wert ist, und zum Erzeugen eines Alarms und Ausgeben eines Treiberstopp-Verriegelungssignals, wenn die Anzahl der Rotationspulse kleiner als ein erlaubbarer Wert ist.

39. Verfahren nach Anspruch 23, wobei der Hauptsteuerschritt einen Wegverifikationsschritt aufweist zum Berechnen eines Wegindex entsprechend dem augenblicklichen Weg der Detektoren unter Verwendung der Wegschalter in dem Wegselektor simultan wenn der Wegselektor betrieben wird, zum Bestimmen, ob der Kombinationscode der Wegschalter gleich einem vorbeschriebenen Codewert für jeden Wegindex ist, und zum Bestimmen, dass der Wegselektor elektrisch oder mechanisch defekt ist und deshalb Erzeugen eines Weg-Fehlanpassungsalarms und Ausgeben eines Wegselektorstopp-Verriegelungssignals, wenn der Kombinationscode der Wegschalter nicht gleich dem Codewert ist.

40. Verfahren nach Anspruch 23 oder 24, wobei der Betriebssteuerschritt aufweist:
einen Benutzer-Interface-Schritt zum Liefern eines Benutzer-Interface-Schirms, so dass der Operator Betriebsinformationen auf dem Benutzer-Interface-Schirm eingeben kann;
einen Datenübertragungs-/-empfangsschritts zum Übertragen eines Betriebssteuersignals, eingegeben auf dem Benutzer-Interface-Schirm, zu der Hauptsteuereinrichtung ansprechend auf die Anforderung des Betriebs und Empfangens der Arbeitsstatusinformation, eines Alarms und Flussdaten von der Hauptsteuereinrichtung ansprechend auf das Betriebssteuersignal; und
einen Flussdaten-Verarbeitungsschritt zum Sammeln der Flussdaten zum Untersuchen einer Zuverlässigkeit der Flussdaten, Korrigieren und Zusammenziehen der geprüften Flussdaten und Erzeugen der korrigierten und zusammengezogenen Flussdaten in Form einer Datei, einer graphischen Darstellung oder einer Zahl, so dass der Fluss gespeichert, angezeigt oder ausgegeben wird.

41. Verfahren nach Anspruch 40, wobei der Benutzer-Interface-Schritt einen Automatikmodus-Betriebsschirm zum automatischen Auswählen von Detektorwegen von allen Flusswegen innerhalb des nuklearen Reaktors gemäß einer Arbeitssequenz vorbeschrieben durch Gruppen in dem automatischen Betriebsmodus bietet, Einsetzen der Detektoren in die automatisch ausgewählten Detektorwege, Scannen und Aufnehmen der Detektoren, Zurückziehen der Detektoren aus den automatisch ausgewählten Detektorwegen, automatisches Kontrollieren der Spannung der Detektoren und automatisches Prozessieren der gesammelten Flussdaten bietet.

42. Verfahren nach Anspruch 40, wobei der Benutzer-Interface-Schritt einen Betriebsschirm zum Klassifizieren einer Mehrzahl von Flusswegen innerhalb des nuklearen Reaktors in vorgeschriebene Gruppen in einem automatischen Betriebsmodus, einem halbautomatischen Betriebsmodus oder einem manuellen Betriebsmodus, zum Ausgeben von Operationssteuersignalen durch die vorbestimmten Gruppen zum Steuern der Wegselektoren und der Treiber und zum individuellen Steuern der Spannung der Detektorspannungs-Versorgungseinheit, so dass die Flussdaten akquiriert werden können, bietet.

43. Verfahren nach Anspruch 40, wobei der Benutzer-Interface-Schritt einen Betriebsschirm hat zum Klassifizieren einer Mehrzahl von Flusswegen innerhalb des nuklearen Reaktors in vorbeschriebene Gruppen in einem automatischen Betriebsmodus, einem halbautomatischen Betriebsmodus oder einem manuellen Betriebsmodus und zum Anzeigen von Arbeitsstatusinformationen, eines Alarms und Flussdaten durch die vorgeschriebenen Gruppen.

44. Verfahren nach Anspruch 23 oder 24, wobei der Betriebssteuerschritt einen Interface-Schirm zum Updaten des Betriebssystems der Hauptsteuereinheit ansprechend auf die Anforderung des Operators aufweist und weiterhin einen Übertragungsschritt zum Übertragen des Betriebssystems der Hauptsteuereinrichtung, aufgefrischt auf dem Schnittstellenschirm an die Hauptsteuereinrichtung, aufweist, so dass das Betriebssystem, welches in der Hauptsteuereinrichtung gespeichert ist, aufgefrischt werden kann.

## Revendications

1. Système de commande numérique pour des systèmes de relevé de flux neutronique qui permet à une pluralité de détecteurs (23) respectivement pilotés au moyen d'une pluralité de circuits de pilotage (22), d'être insérés dans un réacteur nucléaire (40) dans une séquence régulière par l'intermédiaire de chemins de détecteur (30) sélectionnés au moyen d'un sélecteur de chemin de détecteur (24) de sorte que la distribution de neutrons à l'intérieur du réacteur nucléaire est mesurée pour vérifier l'état courant du réacteur nucléaire (40), dans lequel le système de commande numérique comprend :
un moyen de mise en oeuvre (10) pour sortir un signal de commande de mise en oeuvre en utilisant des informations de mise en oeuvre manuellement fixées par un opérateur ou des informations de mise en oeuvre prédéterminées, et pour recueillir et administrer des données de flux transmises en réponse au signal de commande de mise en oeuvre ; et
un moyen de commande principal (21) pour
permettre aux détecteurs (23) d'être insérés ou retirés à une vitesse et dans un sens prédéterminés à travers les chemins de détecteur (30) en réponse au signal de commande de mise en oeuvre du moyen de mise en oeuvre (10) ;
recueillir et stocker des données de distribution neutronique à l'intérieur du réacteur nucléaire mesurées au moyen des détecteurs (23), et
transmettre les données de distribution neutronique au moyen de mise en oeuvre (10), **caractérisé en ce que**
le moyen de commande principal (21) inclut un module de commande principal (520) pour déterminer si un mode manuel, un mode semi-automatique, ou un mode automatique est sélectionné,
commander le sélecteur de chemin (24) selon une commande de contrôle de chemin entrée par l'opérateur et
commander les circuits de pilotage (22) selon une commande de contrôle marche / arrêt de circuit de pilotage, une commande de contrôle de sens de circuit de pilotage, et une commande de contrôle de vitesse de circuit de pilotage entrées par l'opérateur quand le mode manuel est sélectionné,
commander le sélecteur de chemin (24) selon une commande de contrôle de chemin entrée par l'opérateur et commander les circuits de pilotage (22) partiellement automatiquement selon une commande de contrôle d'insertion, une commande de contrôle de balayage, une commande de contrôle d'enregistrement, et une commande de contrôle de retrait entrées par l'opérateur quand le mode semi-automatique est sélectionné,
initialiser un comptage de séquence pour déterminer si un signal d'interruption externe existe quand le mode automatique est sélectionné,
finir la mise en oeuvre quand le signal d'interruption externe existe, produisant automatiquement une commande de contrôle de chemin selon une séquence de travail prédéterminée pour commander le sélecteur de chemin (24) et produisant automatiquement une commande de contrôle d'insertion, une commande de contrôle de balayage, une commande de contrôle d'enregistrement, et une commande de contrôle de retrait selon une séquence de mise en oeuvre prédéterminée pour commander les circuits de pilotage (22) quand le signal d'interruption externe n'existe pas, finissant le travail quand le comptage de séquence est plus grand qu'une valeur limite prédéterminée, et augmentant le comptage de séquence de sorte que la mise en oeuvre est effectuée à plusieurs reprises selon une séquence de travail suivante quand le comptage de séquence n'est pas supérieur à la valeur limite prédéterminée.

2. Système de commande numérique selon la revendication 1, dans lequel le système de commande numérique comprend en outre :
un réseau de communication de données (100) ;
un moyen de mise en oeuvre (200) pour
recueillir et administrer des informations d'état de travail, une alarme, et des données de flux reçues par l'intermédiaire du réseau de communication de données (100) en réponse au signal de commande de mise en oeuvre, et
sortir les informations d'état de mise en oeuvre recueillies et administrées, l'alarme et les données de flux sur un écran ;
un moyen de contrôle (300), ayant la même structure que le moyen de mise en oeuvre (200), pour contrôler l'état de travail par l'intermédiaire du réseau de communication de données au niveau d'une zone distante,
le moyen de contrôle (300) pouvant être exclusivement utilisé en tant que moyen de mise en oeuvre en cas d'urgence ;
un moyen de calcul de physique de coeur (400) pour analyser l'état d'un coeur du réacteur nucléaire en utilisant les données de flux reçues par l'intermédiaire du réseau de communication de données (100) ; et
un moyen de commande principal (500) pour
comparer des informations d'état de travail suivies en réponse au signal de commande de mise en oeuvre à une valeur admissible ou une valeur limite fixée en tant qu'informations de mise en oeuvre pour diagnostiquer les informations d'état de mise en oeuvre,
sortir un signal d'interverrouillage et un signal d'alarme pour protéger les instruments quand un état anormal survient,
stocker les données de distribution neutronique en tant que données de flux,
dans lequel lesdites informations de mise en oeuvre prédéterminées sont sorties par l'intermédiaire du réseau de communication de données (100) ;
transmettre les informations d'état de travail, l'alarme et les données de flux par l'intermédiaire du réseau de communication de données (100).

3. Système selon la revendication 1 ou 2, comprenant en outre :
un moyen de commande auxiliaire (600) pour permettre aux détecteurs d'être insérés en urgence ou retirés en urgence à une vitesse et dans un sens prédéterminés à travers les chemins de détecteur dans un mode manuel quand le moyen de commande principal n'est pas disponible.

4. Système selon la revendication 1 ou 2, comprenant en outre :
une pluralité de capteurs acoustiques (710) attachés aux circuits de pilotage et au sélecteur de chemin pour détecter et sortir le signal sonore des circuits de pilotage et du sélecteur de chemin ; et
un moyen de commande de son de champ (700) pour traiter le signal détecté entré à partir des capteurs acoustiques de sorte que les sons sont sortis par un haut-parleur.

5. Système selon la revendication 1, dans lequel le moyen de commande principal inclut un module de commande de sélecteur de chemin (525) pour sélectionner un chemin de détecteur en réponse à une commande de contrôle de chemin entrée manuellement ou automatiquement à partir du module de commande principal (520), produisant une alarme informant que les détecteurs sont insérés et un signal d'interverrouillage d'arrêt de sélecteur de chemin quand la position courante des détecteurs est vérifiée au moyen de l'émetteur de position de détecteur et on détermine que la position courante des détecteurs est au-dessus d'une limite de retrait, recevoir le chemin courant des détecteurs à partir des commutateurs de chemin dans le sélecteur de chemin, et piloter le sélecteur de chemin jusqu'à ce que la valeur entrée des commutateurs de chemin soit égale à une valeur de consigne de chemin fixée manuellement ou automatiquement.

6. Système selon la revendication 5, dans lequel le module de commande de sélecteur de chemin (525) compte un temps de mise en oeuvre après que le sélecteur de chemin est piloté, et produit une alarme de dépassement de temps de sélection de chemin et un signal d'interverrouillage d'arrêt de sélecteur de chemin de sorte que le sélecteur de chemin (24) n'est pas piloté quand le temps de mise en oeuvre compté est au-dessus d'une valeur admissible prédéterminée.

7. Système selon la revendication 1, dans lequel le moyen de commande principal inclut un module de commande d'insertion (530) pour détecter la position courante des détecteurs (23) à l'aide de capteurs de champ (910) et un émetteur de position de détecteur (940) tout en permettant aux circuits de pilotage (22) d'avancer dans un sens vers l'avant à grande vitesse quand une commande d'insertion des détecteurs (23) est délivrée manuellement ou automatiquement à partir du module de commande principal (520), permettant à l'opération d'insertion des détecteurs d'être effectuée de façon continue quand la position courante des détecteurs (23) est plus grande qu'une valeur de limite de retrait et plus petite que la valeur de limite inférieure du réacteur nucléaire, et permettant aux circuits de pilotage (22) d'être arrêtés quand la position courante des détecteurs (23) est plus petite que la valeur de limite de retrait ou plus grande que la valeur de limite inférieure du réacteur nucléaire.

8. Système selon la revendication 1, dans lequel le moyen de commande principal inclut un module de commande de balayage (535) pour permettre aux détecteurs (23) de balayer l'intérieur du réacteur nucléaire tout en permettant aux circuits de pilotage (22) d'avancer dans un sens vers l'avant à faible vitesse et détecte la position courante des détecteurs à l'aide des capteurs de champ (910) et d'un émetteur de position de détecteur (940) quand une commande de balayage des détecteurs est délivrée manuellement ou automatiquement à partir du module de commande principal (520), permettant à l'opération de balayage des détecteurs d'être effectuée de façon continue quand la position courante des détecteurs est plus grande que la valeur de limite inférieure du réacteur nucléaire et plus petite que la valeur de limite supérieure du réacteur nucléaire, et permettant aux circuits de pilotage d'être arrêtés quand la position courante des détecteurs est plus petite que la valeur de limite inférieure du réacteur nucléaire et plus grande que la valeur de limite supérieure du réacteur nucléaire.

9. Système selon la revendication 1, dans lequel le moyen de commande principal inclut un module de commande d'enregistrement (540) pour permettre à des données acquises au moyen des détecteurs (23) d'être reçues et enregistrées tout en permettant aux circuits de pilotage (22) d'avancer dans un sens inverse à faible vitesse et détecter la position courante des détecteurs à l'aide des capteurs de champ (910) et un émetteur de position de détecteur (940) quand une commande d'enregistrement des détecteurs est délivrée manuellement ou automatiquement à partir du module de commande principal (520), permettant à l'opération d'enregistrement des détecteurs d'être effectuée de façon continue quand la position courante des détecteurs est plus grande que la valeur de limite inférieure du réacteur nucléaire et plus petite que la valeur de limite supérieure du réacteur nucléaire, et permettant aux circuits de pilotage d'être arrêtés quand la position courante des détecteurs est plus petite que la valeur de limite inférieure du réacteur nucléaire et plus grande que la valeur de limite supérieure du réacteur nucléaire.

10. Système selon la revendication 1, dans lequel le moyen de commande principal inclut un module de commande de retrait (545) pour permettre aux détecteurs (23) d'être retirés tout en permettant aux circuits de pilotage (22) d'avancer dans un sens inverse à grande vitesse et détecter la position courante des détecteurs à l'aide des capteurs de champ (910) et d'un émetteur de position de détecteur (940) quand une commande de retrait des détecteurs est délivrée manuellement ou automatiquement à partir du module de commande principal (520), permettant à l'opération de balayage des détecteurs d'être effectuée de façon continue quand la position courante des détecteurs est plus grande qu'une valeur de limite de retrait et plus petite que la valeur de limite inférieure du réacteur nucléaire, et permettant aux circuits de pilotage d'être arrêtés quand la position courante des détecteurs est plus petite que la valeur de limite de retrait et plus grande que la valeur de limite inférieure du réacteur nucléaire.

11. Système selon la revendication 1, dans lequel le moyen de commande principal inclut un module de commande de marche / arrêt de circuit de pilotage (550) pour déterminer si le sélecteur de chemin (24) avance ou pas quand une commande marche / arrêt des circuits de pilotage (22) est délivrée manuellement ou automatiquement à partir du module de commande principal (520), produisant une alarme et sortant un signal d'interverrouillage d'arrêt de circuit de pilotage quand le sélecteur de chemin avance, pour déterminer si un chemin d'étalonnage est fixé ou pas en double quand le sélecteur de chemin n'avance pas, produisant une alarme et un signal d'interverrouillage d'arrêt quand le chemin d'étalonnage est fixé en double, mettant en fonction un contact d'avance dans le cas où la commande en provenance du module de commande principal est une commande d'avance quand le chemin d'étalonnage n'est pas fixé en double, et mettant hors fonction un contact d'avance dans le cas où la commande en provenance du module de commande principal est une commande d'arrêt quand le chemin d'étalonnage n'est pas fixé en double.

12. Système selon la revendication 1, dans lequel le moyen de commande principal inclut :
un module de commande de sens de circuit de pilotage (555) pour permettre à un contact d'avance d'être mis en fonction de sorte que les circuits de pilotage (22) peuvent être tournés dans un sens avant quand une commande de rotation avant des circuits de pilotage est entrée manuellement ou automatiquement à partir du module de commande principal (520), et pour permettre à un contact inverse d'être mis hors fonction de sorte que les circuits de pilotage (22) peuvent être tournés dans un sens inverse quand une commande de rotation inverse des circuits de pilotage est entrée manuellement ou automatiquement à partir du module de commande principal (520) ; et
un module de commande de vitesse de circuit de pilotage (650) pour permettre à un contact de faible vitesse d'être mis en fonction de sorte que les circuits de pilotage (22) peuvent être tournés à faible vitesse quand une commande de rotation à faible vitesse est entrée manuellement ou automatiquement à partir du module de commande principal (520), et permettant à un contact de haute vitesse d'être mis en fonction de sorte que les circuits de pilotage peuvent être tournés à grande vitesse quand une commande de rotation à haute vitesse est entrée manuellement ou automatiquement à partir du module de commande principal.

13. Système selon la revendication 1, dans lequel le moyen de commande principal inclut un module d'acquisition de données de flux (565) pour initialiser un compte de données correspondant au nombre total des unités de données de flux, acquérant et stockant des unités de données une à une, augmentant le compte de données, et permettant à un sous-programme d'acquisition de données d'être fini quand le compte de données est au-dessus d'une valeur de limite prédéterminée.

14. Système selon la revendication 13, dans lequel le module d'acquisition de données de flux (565) est mis en oeuvre de sorte que l'acquisition de données est effectuée par un utilisateur ou par des unités d'un temps d'acquisition de données prédéterminé.

15. Système selon la revendication 1, dans lequel le moyen de commande principal inclut un module de diagnostic de vitesse de détecteur (570) pour stocker une position de détecteur entrée à partir de l'émetteur de position de détecteur (940) par des unités d'une période prédéterminée, soustrayant la valeur de position de détecteur précédente de la valeur de position de détecteur courante, divisant la valeur de résultat de soustraction par un temps prédéterminé, calculant la valeur de vitesse de résultat divisée des détecteurs (23) en tant que valeur de vitesse absolue, comparant la valeur de vitesse absolue à une valeur de limite inférieure admissible et à une valeur de limite supérieure admissible, et produisant une alarme et sortant un signal d'interverrouillage d'arrêt de circuit de pilotage quand la valeur de vitesse absolue est plus petite que la valeur de limite inférieure admissible et plus grande que la valeur de limite supérieure admissible.

16. Système selon la revendication 1, dans lequel le moyen de commande principal inclut un module de diagnostic sans mouvement de détecteur (575) pour initialiser le temps et le nombre d'impulsions de rotation de bobine de stockage de détecteur, comptant les impulsions de rotation de bobine de stockage de détecteur pendant une période de temps prédéterminée, effectuant de façon continue un sous-programme de diagnostic sans mouvement de détecteur quand le nombre des impulsions de rotation est plus grand qu'une valeur admissible, et produisant une alarme et sortant un signal d'interverrouillage d'arrêt de circuit de pilotage quand le nombre des impulsions de rotation est plus petit qu'une valeur admissible.

17. Système selon la revendication 1, dans lequel le moyen de commande principal inclut un module de vérification de chemin (580) pour calculer un indice de chemin correspondant au chemin courant des détecteurs en utilisant les commutateurs de chemin dans le sélecteur de chemin simultanément quand le sélecteur de chemin est mis en oeuvre, déterminant si le code de combinaison des commutateurs de chemin est égal à une valeur de code prédéterminée pour chaque indice de chemin, et en considérant que le sélecteur de chemin est électriquement ou mécaniquement défectueux et produisant par conséquent une alarme de discordance de chemin et sortant un signal d'interverrouillage d'arrêt de sélecteur de chemin quand le code de combinaison des commutateurs de chemin n'est pas égal à la valeur de code.

18. Système selon la revendication 1 ou 2, dans lequel le moyen de mise en oeuvre comprend :
un module d'interface utilisateur (231) ayant un écran d'interface utilisateur pour permettre à l'opérateur d'entrer des informations de mise en oeuvre sur ce dernier ;
un module émetteur-récepteur de données (232) pour émettre un signal de commande de mise en oeuvre entré sur l'écran d'interface utilisateur vers le moyen de commande principal en réponse à la demande de la mise en oeuvre et pour recevoir des informations d'état de travail, une alarme et des données de flux en provenance du moyen de commande principal en réponse au signal de commande de mise en oeuvre ; et
un module de traitement de données de flux (233) pour recueillir les données de flux pour examiner la fiabilité des données de flux, corriger et contracter les données de flux examinées, et produire les données de flux corrigées et contractées sous la forme d'un fichier, d'un graphique, ou d'un chiffre de sorte que les données de flux sont stockées, affichées ou sorties.

19. Système selon la revendication 18, dans lequel le module d'interface utilisateur (231) a un écran de mise en oeuvre de mode automatique pour sélectionner automatiquement des chemins de détecteur à partir de tous les chemins de flux à l'intérieur du réacteur nucléaire selon une séquence de travail prédéterminée par des groupes dans le mode de mise en oeuvre automatique, pour insérer les détecteurs dans les chemins de détecteur automatiquement sélectionnés, pour balayer et enregistrer les détecteurs, retirer les détecteurs des chemins de détecteur automatiquement sélectionnés, pour commander automatiquement la tension des détecteurs, et pour traiter automatiquement les données de flux recueillies.

20. Système selon la revendication 18, dans lequel le module d'interface utilisateur (231) a un écran de mise en oeuvre pour classer une pluralité de chemins de flux à l'intérieur du réacteur nucléaire en groupes prédéterminés dans un mode de mise en oeuvre automatique, un mode de mise en oeuvre semi-automatique, ou un mode de mise en oeuvre manuel, sortant des signaux de commande de mise en oeuvre par les groupes prédéterminés pour commander le sélecteur de chemin et les circuits de pilotage et pour commander individuellement la tension de l'unité d'alimentation en courant de détecteur de sorte que les données de flux peuvent être acquises.

21. Système selon la revendication 18, dans lequel le module d'interface utilisateur (231) a un écran de mise en oeuvre pour classer une pluralité de chemins de flux à l'intérieur du réacteur nucléaire en groupes prédéterminés dans un mode de mise en oeuvre automatique, un mode de mise en oeuvre semi-automatique, ou un mode de mise en oeuvre manuel, et pour afficher des informations d'état de travail, une alarme et des données de flux par les groupes prédéterminés.

22. Système selon la revendication 1 ou 2, dans lequel le moyen de mise en oeuvre a un écran d'interface pour mettre à jour le système d'exploitation du moyen de commande principal en réponse à la demande de l'opérateur, et transmet le système d'exploitation du moyen de commande principal mis à jour sur l'écran d'interface vers le moyen de commande principal de sorte que le système d'exploitation stocké dans le moyen de commande principal peut être mis à jour.

23. Procédé de commande numérique pour des systèmes de relevé de flux neutronique qui permet à une pluralité de détecteurs (23) respectivement pilotés au moyen d'une pluralité de circuits de pilotage (22), d'être insérés dans un réacteur nucléaire (40) dans une séquence régulière par l'intermédiaire de chemins de détecteur (30) sélectionnés au moyen d'un sélecteur de chemin de détecteur (24) de sorte que la distribution de neutrons à l'intérieur du réacteur nucléaire est mesurée pour vérifier l'état courant du réacteur nucléaire (40), dans lequel le procédé de commande numérique comprend :
une étape de commande de mise en oeuvre pour sortir un signal de commande de mise en oeuvre en utilisant des informations de mise en oeuvre manuellement fixées par un opérateur ou des informations de mise en oeuvre prédéterminées, et pour recueillir et administrer des données de flux transmises en réponse au signal de commande de mise en oeuvre ; et
une étape de commande principale pour
permettre aux détecteurs (23) d'être insérés ou retirés à une vitesse et dans un sens prédéterminés par l'intermédiaire des chemins de détecteur (30) en réponse au signal de commande de mise en oeuvre au niveau de l'étape de commande de mise en oeuvre,
recueillir et stocker des données de distribution neutronique à l'intérieur du réacteur nucléaire mesurée au moyen des détecteurs (23), et
transmettre les données de distribution neutronique à un moyen de mise en oeuvre, **caractérisé en ce que**
l'étape de commande principale inclut une étape de traitement de commande pour
déterminer si un mode manuel, un mode semi-automatique, ou un mode automatique est sélectionné,
commander le sélecteur de chemin (24) selon une commande de contrôle de chemin entrée par l'opérateur et commander les circuits de pilotage (22) selon une commande de contrôle de marche / arrêt de circuit de pilotage, une commande de contrôle de sens de circuit de pilotage, et une commande de contrôle de vitesse de circuit de pilotage entrées par l'opérateur quand le mode manuel est sélectionné,
commander le sélecteur de chemin (24) selon une commande de contrôle de chemin entrée par l'opérateur et commander les circuits de pilotage (22) partiellement automatiquement selon une commande de contrôle d'insertion, une commande de contrôle de balayage, une commande de contrôle d'enregistrement, et une commande de contrôle de retrait entrées par l'opérateur quand le mode semi-automatique est sélectionné,
Initialiser un compte de séquence pour déterminer si un signal d'interruption externe existe quand le mode automatique est sélectionné,
finir la mise en oeuvre quand le signal d'interruption externe existe, produisant automatiquement une commande de contrôle de chemin selon une séquence de travail prédéterminée pour commander le sélecteur de chemin et produisant automatiquement une commande de contrôle d'insertion, une commande de contrôle de balayage, une commande de contrôle d'enregistrement, et une commande de contrôle de retrait selon une séquence de mise en oeuvre prédéterminée pour commander les circuits de pilotage quand le signal d'interruption externe n'existe pas,
finir le travail quand le compte de séquence est plus grand qu'une valeur de limite prédéterminée, et augmenter le compte de séquence de sorte que la mise en oeuvre est effectuée à plusieurs reprises selon une séquence de travail suivante quand le compte de séquence n'est pas plus grand que la valeur de limite prédéterminée.

24. Procédé selon la revendication 23, dans lequel l'étape de commande de mise en oeuvre sert à
sortir des informations de mise en oeuvre prédéterminées par l'intermédiaire d'un réseau de communication de données (100),
recueillir et administrer des informations d'état de travail, une alarme, et des données de flux reçues par l'intermédiaire du réseau de communication de données (100) en réponse au signal de commande de mise en oeuvre, et
sortir les informations d'état de mise en oeuvre recueillies et administrées, l'alarme et les données de flux sur un écran ;
le procédé comprenant en outre
une étape de contrôle, ayant la même procédure que l'étape de commande de mise en oeuvre,
pour contrôler l'état de travail par l'intermédiaire du réseau de communication de données (100) au niveau d'une zone distante, l'étape de contrôle pouvant être exclusivement utilisée en tant qu'étape de commande de mise en oeuvre en cas d'urgence ;
une étape de calcul de physique de coeur pour analyser l'état du coeur du réacteur nucléaire en utilisant les données de flux reçues par l'intermédiaire du réseau de communication de données (100) ; et dans lequel l'étape de commande principale sert à
comparer des informations d'état de travail effectuées en réponse au signal de commande de mise en oeuvre à une valeur admissible ou une valeur de limite fixée en tant qu'informations de mise en oeuvre pour diagnostiquer les informations d'état de mise en oeuvre,
sortir un signal d'interverrouillage et un signal d'alarme pour protéger les instruments quand un état anormal survient,
stocker les données de distribution neutronique en tant que données de flux, et
transmettre les informations d'état de travail, l'alarme et les données de flux par l'intermédiaire du réseau de communication de données (100).

25. Procédé selon la revendication 23 ou 24, comprenant en outre : une étape de commande auxiliaire pour permettre aux détecteurs d'être insérés en urgence ou retirés en urgence à une vitesse et dans un sens prédéterminés à travers les chemins de détecteur dans un mode manuel quand un moyen de commande principal n'est pas disponible.

26. Procédé selon la revendication 23 ou 24, comprenant en outre :
une étape de commande de son de champ pour traiter le signal détecté entré à partir d'une pluralité de capteurs acoustiques, attachés aux circuits de pilotage et au sélecteur de chemin pour détecter et sortir le signal sonore des circuits de pilotage et du sélecteur de chemin, au moyen d'une unité de commande de son de champ de sorte que les sons sont sortis par l'intermédiaire d'un haut-parleur.

27. Procédé selon la revendication 23, dans lequel l'étape de commande principale inclut une étape de commande de sélecteur de chemin pour sélectionner un chemin de détecteur en réponse à une commande de contrôle de chemin entrée manuellement ou automatiquement à partir d'un module de commande principal (520), produisant une alarme informant que les détecteurs sont insérés et un signal d'interverrouillage d'arrêt de sélecteur de chemin quand la position courante des détecteurs est vérifiée au moyen de l'émetteur de position de détecteur et on détermine que la position courante des détecteurs est au-dessus d'une limite de retrait, recevant le chemin courant des détecteurs à partir des commutateurs de chemin dans le sélecteur de chemin, et pilotant le sélecteur de chemin jusqu'à ce que la valeur entrée à partir des commutateurs de chemin soit égale à une valeur de consigne de chemin de détecteur fixée manuellement ou automatiquement.

28. Procédé selon la revendication 27, dans lequel, au niveau de l'étape de commande de sélecteur de chemin, un temps de mise en oeuvre est compté après que le sélecteur de chemin est piloté, et une alarme de dépassement de temps de sélection de chemin et un signal d'interverrouillage d'arrêt de sélecteur de chemin sont produits de sorte que le sélecteur de chemin n'est pas piloté quand le temps de mise en oeuvre compté est au-dessus d'une valeur admissible prédéterminée.

29. Procédé selon la revendication 23, dans lequel l'étape de commande principale inclut une étape de commande d'insertion pour détecter la position courante des détecteurs (23) à l'aide de capteurs de champ (910) et de l'émetteur de position de détecteur (940) tout en permettant aux circuits de pilotage (22) d'avancer dans un sens vers l'avant à grande vitesse quand une commande d'insertion des détecteurs est délivrée manuellement ou automatiquement à partir d'un module de commande principal (520), permettant à l'opération d'insertion des détecteurs d'être effectuée de façon continue quand la position courante des détecteurs est plus grande qu'une valeur de limite de retrait et plus petite que la valeur de limite inférieure du réacteur nucléaire, et permettant aux circuits de pilotage d'être arrêtés quand la position courante des détecteurs est plus petite que la valeur de limite de retrait ou plus grande que la valeur de limite inférieure du réacteur nucléaire.

30. Procédé selon la revendication 23, dans lequel l'étape de commande principale inclut une étape de commande de balayage pour permettre aux détecteurs (23) de balayer l'intérieur du réacteur nucléaire tout en permettant aux circuits de pilotage (22) d'avancer dans un sens vers l'avant à faible vitesse et détecte la position courante des détecteurs à l'aide des capteurs de champ (910) et de l'émetteur de position de détecteur (940) quand une commande de balayage des détecteurs est délivrée manuellement ou automatiquement à partir d'un module de commande principal (520), permettant à l'opération de balayage des détecteurs d'être effectuée de façon continue quand la position courante des détecteurs est plus grande que la valeur de limite inférieure du réacteur nucléaire et plus petite que la valeur de limite supérieure du réacteur nucléaire, et permettant aux circuits de pilotage d'être arrêtés quand la position courante des détecteurs est plus petite que la valeur de limite inférieure du réacteur nucléaire et plus grande que la valeur de limite supérieure du réacteur nucléaire.

31. Procédé selon la revendication 23, dans lequel l'étape de commande principale inclut une étape de commande d'enregistrement pour permettre à des données acquises au moyen des détecteurs (23) d'être reçues et enregistrées tout en permettant aux circuits de pilotage (22) d'avancer dans un sens inverse à faible vitesse et pour détecter la position courante des détecteurs à l'aide de capteurs de champ (910) et de l'émetteur de position de détecteur (940) quand une commande d'enregistrement des détecteurs est délivrée manuellement ou automatiquement à partir d'un module de commande principal (520), permettant à l'opération d'enregistrement des détecteurs d'être effectuée de façon continue quand la position courante des détecteurs est plus grande que la valeur de limite inférieure du réacteur nucléaire et plus petite que la valeur de limite supérieure du réacteur nucléaire, et permettant aux circuits de pilotage d'être arrêtés quand la position courante des détecteurs est plus petite que la valeur de limite inférieure du réacteur nucléaire et plus grande que la valeur de limite supérieure du réacteur nucléaire.

32. Procédé selon la revendication 23, dans lequel l'étape de commande principale inclut une étape de commande de retrait pour permettre aux détecteurs (23) d'être retirés tout en permettant aux circuits de pilotage (22) d'avancer dans un sens inverse à grande vitesse et pour détecter la position courante des détecteurs à l'aide de capteurs de champ (910) et de l'émetteur de position de détecteur (940) quand une commande de retrait des détecteurs est délivrée manuellement ou automatiquement à partir d'un module de commande principal, permettant à l'opération de balayage des détecteurs d'être effectuée de façon continue quand la position courante des détecteurs est plus grande qu'une valeur de limite de retrait et plus petite que la valeur de limite inférieure du réacteur nucléaire, et permettant aux circuits de pilotage d'être arrêtés quand la position courante des détecteurs est plus petite que la valeur de limite de retrait et plus grande que la valeur de limite inférieure du réacteur nucléaire.

33. Procédé selon la revendication 23, dans lequel l'étape de commande principale inclut une étape de commande de marche / arrêt de circuit de pilotage pour déterminer si le sélecteur de chemin (24) avance ou pas quand une commande marche / arrêt des circuits de pilotage (22) est délivrée manuellement ou automatiquement à partir d'un module de commande principal (520), produisant une alarme et sortant un signal d'interverrouillage d'arrêt de circuit de pilotage quand le sélecteur de chemin avance, déterminant si un chemin d'étalonnage est fixé ou pas en double quand le sélecteur de chemin n'avance pas, produisant une alarme et un signal d'interverrouillage d'arrêt de circuit de pilotage quand le chemin d'étalonnage est fixé en double, mettant en fonction un contact d'avance dans le cas où la commande en provenance du module de commande principal est une commande d'avance quand le chemin d'étalonnage n'est pas fixé en double,
et mettant hors fonction le contact d'avance dans le cas où la commande en provenance du module de commande principal est une commande d'arrêt quand le chemin d'étalonnage n'est pas fixé en double.

34. Procédé selon la revendication 23, dans lequel l'étape de commande principale inclut :
une étape de commande de sens de circuit de pilotage pour permettre à un contact avant d'être mis en fonction de sorte que les circuits de pilotage (22) peuvent être tournés dans un sens avant quand une commande de rotation avant des circuits de pilotage est entrée manuellement ou automatiquement à partir d'un module de commande principal (520), et permettant à un contact inverse d'être mis hors fonction de sorte que les circuits de pilotage peuvent être tournés dans un sens inverse quand une commande de rotation inverse des circuits de pilotage est entrée manuellement ou automatiquement à partir du module de commande principal ; et
une étape de commande de vitesse de circuit de pilotage pour permettre à un contact de vitesse basse d'être mis en fonction de sorte que les circuits de pilotage (22) peuvent être tournés à faible vitesse quand une commande de rotation à faible vitesse est entrée manuellement ou automatiquement à partir du module de commande principal (520), et permettant à un contact de haute vitesse d'être mis en fonction de sorte que les circuits de pilotage peuvent être tournés à grande vitesse quand une commande de rotation à haute vitesse est entrée manuellement ou automatiquement à partir du module de commande principal (520).

35. Procédé selon la revendication 23, dans lequel l'étape de commande principale inclut une étape d'acquisition de données de flux pour initialiser à un compte de données correspondant au nombre total des unités de données de flux, acquérant et stockant des unités de données une à une, augmentant le compte de données, et permettant à un sous-programme d'acquisition de données d'être fini quand le compte de données est au-dessus d'une valeur de limite prédéterminée.

36. Procédé selon la revendication 35, dans lequel l'étape d'acquisition de données de flux est effectuée de sorte que l'acquisition de données est effectuée par un utilisateur ou par des unités d'un temps d'acquisition de données prédéterminé.

37. Procédé selon la revendication 23, dans lequel l'étape de commande principale inclut une étape de diagnostic de vitesse de détecteur pour stocker une position de détecteur entrée à partir d'un émetteur de position de détecteur (940) par des unités d'une période prédéterminée, soustrayant la valeur de position de détecteur précédente de la valeur de position de détecteur courante, divisant la valeur de résultat de soustraction par un temps prédéterminé, calculant la valeur de vitesse de résultat divisée des détecteurs (23) en tant que valeur de vitesse absolue, comparant la valeur de vitesse absolue à une valeur de limite inférieure admissible et à une valeur de limite supérieure admissible, et produisant une alarme et sortant un signal d'interverrouillage d'arrêt de circuit de pilotage quand la valeur de vitesse absolue est plus petite que la valeur de limite inférieure admissible et plus grande que la valeur de limite supérieure admissible.

38. Procédé selon la revendication 23, dans lequel l'étape de commande principale inclut une étape de diagnostic sans mouvement de détecteur pour initialiser le temps et le nombre d'impulsions de rotation de bobine de stockage de détecteur, compter les impulsions de rotation de bobine de stockage de détecteur pendant une période de temps prédéterminée, effectuer de façon continue un sous-programme de diagnostic sans mouvement de détecteur quand le nombre des impulsions de rotation est plus grand qu'une valeur admissible, et produisant une alarme et sortant un signal d'interverrouillage d'arrêt de circuit de pilotage quand le nombre des impulsions de rotation est plus petit qu'une valeur admissible.

39. Procédé selon la revendication 23, dans lequel l'étape de commande principale inclut une étape de vérification de chemin pour calculer un indice de chemin correspondant au chemin courant des détecteurs en utilisant les commutateurs de chemin dans le sélecteur de chemin simultanément lorsque le sélecteur de chemin est mis en oeuvre, déterminant si le code de combinaison des commutateurs de chemin est égal à une valeur de code prédéterminée pour chaque indice de chemin, et en considérant que le sélecteur de chemin est électriquement ou mécaniquement défectueux et produisant par conséquent une alarme de discordance de chemin et sortant un signal d'interverrouillage d'arrêt de sélecteur de chemin quand le code de combinaison des commutateurs de chemin n'est pas égal à la valeur de code.

40. Procédé selon la revendication 23 ou 24, dans lequel l'étape de commande de mise en oeuvre comprend :
une étape d'interface utilisateur pour fournir un écran d'interface utilisateur de sorte que l'opérateur peut entrer des informations de mise en oeuvre sur l'écran d'interface utilisateur ;
une étape d'émission / réception de données pour transmettre un signal de commande de mise en oeuvre entré sur l'écran d'interface utilisateur à un moyen de commande principal en réponse à la demande de la mise en oeuvre et pour recevoir des informations d'état de travail, une alarme, et des données de flux en provenance du moyen de commande principal en réponse au signal de commande de mise en oeuvre ; et
une étape de traitement de données de flux pour recueillir les données de flux pour examiner la fiabilité des données de flux, corrigeant et contractant les données de flux examinées, et produisant les données de flux corrigées et contractées sous la forme d'un fichier, d'un graphique, ou d'un chiffre de sorte que les données de flux sont stockées, affichées ou sorties.

41. Procédé selon la revendication 40, dans lequel l'étape d'interface utilisateur fournit un écran de mise en oeuvre de mode automatique pour sélectionner automatiquement des chemins de détecteur à partir de tous les chemins de flux à l'intérieur du réacteur nucléaire selon une séquence de travail prédéterminée par des groupes dans le mode de mise en oeuvre automatique, insérer les détecteurs dans les chemins de détecteur automatiquement sélectionnés, balayer et enregistrer les détecteurs, retirer les détecteurs des chemins de détecteur automatiquement sélectionnés, commander automatiquement la tension des détecteurs, et traiter automatiquement les données de flux recueillies.

42. Procédé selon la revendication 40, dans lequel l'étape d'interface utilisateur fournit un écran de mise en oeuvre pour classer une pluralité de chemins de flux à l'intérieur du réacteur nucléaire en groupes prédéterminés dans un mode de mise en oeuvre automatique, un mode de mise en oeuvre semi-automatique, ou un mode de mise en oeuvre manuel, sortir des signaux de commande de mise en oeuvre par les groupes prédéterminés pour commander le sélecteur de chemin et les circuits de pilotage et pour commander individuellement la tension de l'unité d'alimentation en courant de détecteur de sorte que les données de flux peuvent être acquises.

43. Procédé selon la revendication 40, dans lequel l'étape d'interface utilisateur a un écran de mise en oeuvre pour classer une pluralité de chemins de flux à l'intérieur du réacteur nucléaire en groupes prédéterminés dans un mode de mise en oeuvre automatique, un mode de mise en oeuvre semi-automatique, ou un mode de mise en oeuvre manuel, et pour afficher des informations d'état de travail, une alarme et des données de flux par les groupes prédéterminés.

44. Procédé selon la revendication 23 ou 24, dans lequel l'étape de commande de mise en oeuvre fournit un écran d'interface pour mettre à jour le système d'exploitation du moyen de commande principal en réponse à la demande de l'opérateur, et comprenant en outre une étape de transmission pour transmettre le système d'exploitation du moyen de commande principal mis à jour sur l'écran d'interface au moyen de commande principal de sorte que le système d'exploitation stocké dans le moyen de commande principal peut être mis à jour.
